(19)

**Europäisches Patentamt**
**European Patent Office**
**Office européen des brevets**

(11) **EP 4 613 599 A1**

(12) **EUROPEAN PATENT APPLICATION**
published in accordance with Art. 153(4) EPC

(43) Date of publication:
**10.09.2025 Bulletin 2025/37**

(51) International Patent Classification (IPC):
***B60W 60/00*** *(2020.01)*

(21) Application number: **22966800.9**

(22) Date of filing: **30.11.2022**

(86) International application number:
**PCT/CN2022/135286**

(87) International publication number:
**WO 2024/113205 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• WANG, Quanwu
  Shenzhen, Guangdong 518129 (CN)
• ZHENG, Yihong
  Shenzhen, Guangdong 518129 (CN)
• WANG, Xingwu
  Shenzhen, Guangdong 518129 (CN)
• YU, Lihui
  Shenzhen, Guangdong 518129 (CN)

(74) Representative: **MERH-IP Matias Erny Reichl
Hoffmann
Patentanwälte PartG mbB
Paul-Heyse-Straße 29
80336 München (DE)**

(54) **DRIVING CONTROL SYSTEM, DRIVING CONTROL METHOD AND RELATED APPARATUS**

(57) The present disclosure provides a driving control system, a driving control method, and a related apparatus, and relates to the field of vehicle technologies. The driving control system includes an accelerator pedal position detection unit (1), a first electronic control unit (2), and a second electronic control unit (3). The accelerator pedal position detection unit (1) includes a position sensor (11), a first signal transmission circuit (12), and a second signal transmission circuit (13). The position sensor (11) can output a position signal to the first electronic control unit (2) and the second electronic control unit (3) through the first signal transmission circuit (12) and the second signal transmission circuit (13) respectively. In this way, when one of the first electronic control unit (2) and the second electronic control unit (3) is faulty, the other electronic control unit can also control a vehicle based on the position signal.

FIG. 3

**Description**

**TECHNICAL FIELD**

The present disclosure relates to the field of vehicle technologies, and in particular, to a driving control system, a driving control method, and a related apparatus.

**BACKGROUND**

In a process of driving a vehicle, a driver controls a power output of the vehicle by controlling an angle at which an accelerator pedal is pressed, to complete control of a vehicle speed.

To implement the foregoing function, in the conventional technology, a position sensor is disposed in an accelerator pedal, and the position sensor is electrically connected to an electronic control unit (electronic control unit, ECU). The position sensor is configured to detect a position signal of the accelerator pedal, and the electronic control unit is configured to control a power output of a vehicle based on the position signal of the accelerator pedal.

Currently, if the electronic control unit is faulty, the vehicle cannot travel normally, causing poor reliability of the vehicle.

**SUMMARY**

The present disclosure provides a driving control system, a driving control method, and a related apparatus. A position sensor in the driving control system is connected to a first electronic control unit and a second electronic control unit. When one of the first electronic control unit and the second electronic control unit is faulty, the other can also control a vehicle. This improves reliability of the vehicle. Technical solutions of the driving control system, the driving control method, and the related apparatus are described as follows.

According to a first aspect, the present disclosure provides a driving control system. The driving control system includes an accelerator pedal position detection unit, a first electronic control unit (electronic control unit, ECU), and a second electronic control unit. The accelerator pedal position detection unit includes a position sensor, a first signal transmission circuit, and a second signal transmission circuit. The position sensor is connected to the first electronic control unit through the first signal transmission circuit. The position sensor is connected to the second electronic control unit through the second signal transmission circuit.

The position sensor is configured to detect a position signal of an accelerator pedal, and the position signal may be a signal of an angle at which the accelerator pedal is pressed. A type of the position sensor is not limited in the present disclosure. In a possible implementation, the position sensor is a resistive sensor. In another possible implementation, the position sensor is a non-contact sensor, for example, a Hall effect sensor.

The first signal transmission circuit is configured to transmit the position signal detected by the position sensor to the first electronic control unit. The second signal transmission circuit is configured to transmit the position signal detected by the position sensor to the second electronic control unit.

The first electronic control unit and the second electronic control unit each are configured to control a power output of a vehicle based on the position signal of the accelerator pedal. In addition, when one of the first electronic control unit and the second electronic control unit is faulty, the other electronic control unit can still operate normally.

In the technical solution provided in the present disclosure, based on the foregoing disposition, the position signal of the accelerator pedal detected by the position sensor can be transmitted to the first electronic control unit and the second electronic control unit through the first signal transmission circuit and the second signal transmission circuit. In this way, when one of the first electronic control unit and the second electronic control unit is faulty, the other electronic control unit can also control the vehicle based on the position signal of the accelerator pedal. This improves reliability of the vehicle.

In a possible implementation, the first signal transmission circuit includes a first position signal circuit and a first ground signal circuit. One end of the first position signal circuit is connected to the position sensor, and the other end is connected to a first signal collection end of the first electronic control unit. One end of the first ground signal circuit is connected to the position sensor, and the other end is connected to a first ground end of the first electronic control unit.

In a possible implementation, the second signal transmission circuit includes a second position signal circuit, a second ground signal circuit, and a differential operation circuit. The second position signal circuit includes a position signal input circuit and a position signal output circuit. The second ground signal circuit includes a first ground circuit and a second ground circuit. One end of the position signal input circuit is connected to the position sensor, and the other end is connected to the differential operation circuit. One end of the first ground circuit is connected to the position sensor, and the other end is connected to the differential operation circuit. One end of the position signal output circuit is connected to the differential operation circuit, and the other end is connected to a second signal collection end of the second electronic control unit. One end of the second ground circuit is connected to the differential operation circuit, and the other end is connected to a second ground end of the second electronic control unit. The differential operation circuit is configured to adjust a voltage V1, relative to the first ground circuit, of a position signal input through the position signal input circuit, so that a voltage V2, relative to the second ground circuit, of a position signal output through the position signal output circuit is in a linear relationship with V1.

The first ground circuit may be connected to the first ground signal circuit, and the position signal input circuit may be connected to the first position signal circuit. In this case, a voltage of the position signal input circuit relative to the first ground circuit is the same as a voltage of the first position signal circuit relative to the first ground signal circuit, and both are V1. V1 is in one-to-one correspondence with positions of the position sensor, and V1 is a voltage collected by the first signal collection end of the first electronic control unit.

In the technical solution provided in the present disclosure, the differential operation circuit is disposed to adjust V1 and V2 to be in a linear relationship, so that V2 collected by the second electronic control unit is not affected by a voltage difference between the first ground end and the second ground end, and is related only to V1. In this way, V1 and V2 are in one-to-one correspondence with positions of the accelerator pedal. Therefore, the position of the accelerator pedal determined by the second electronic control unit based on V2 is accurate.

In a possible implementation, $V2=k \times V1+V0$, where V0 is a target non-negative voltage, and k is a constant greater than 0.

In the technical solution provided in the present disclosure, the differential operation circuit is disposed to adjust V1 and V2 to satisfy a relational expression of $V2=k \times V1+V0$, so that V1 collected by the first electronic control unit is in the linear relationship with V2 collected by the second electronic control unit, and there is no impact of another unknown parameter (for example, the voltage difference between the first ground end and the second ground end). In this way, V1 and V2 are in one-to-one correspondence with the positions of the accelerator pedal. Therefore, the position of the accelerator pedal determined by the second electronic control unit based on V2 is accurate.

In addition, because k is greater than 0, and V0 is greater than 0 V, a voltage, relative to the second ground end, of the position signal output through the position signal output circuit is a non-negative voltage. This can avoid a case in which the second signal collection end cannot normally collect the position signal due to a negative voltage input to the second signal collection end of the second electronic control unit. This improves robustness of the system.

In a possible implementation, $k \times V1max+V0 \leq V1max$, where V1max is a maximum value of V1.

In the technical solution provided in the present disclosure, the differential operation circuit is configured to adjust V1 and V2 to satisfy a relational expression of $k \times V1max+V0 \leq V1max$, so that a maximum voltage collected by the second electronic control unit does not exceed a maximum voltage allowed to be collected. This improves accuracy and reliability of the system.

In a possible implementation, the differential operation circuit includes a first operational amplifier, a first resistor, a second resistor, a third resistor, and a fourth resistor. The first operational amplifier has a first positive input end, a first negative input end, and a first operation output end. The position signal input circuit is connected to the first positive input end through the first resistor. The first ground circuit is connected to the first negative input end through the fourth resistor. The position signal output circuit is connected to the first operation output end, and the first operation output end is connected to the first negative input end through the third resistor. The second ground circuit is connected to the first positive input end through the second resistor.

In a possible implementation, the differential operation circuit further includes a voltage step-up unit and a fifth resistor. The voltage step-up unit is connected to the first positive input end through the fifth resistor.

In the technical solution provided in the present disclosure, the voltage step-up unit is disposed in the differential operation circuit, to increase a voltage of a position signal input by the first positive input end of the first operational amplifier, and a voltage step-up value of the voltage step-up unit is appropriately designed, so that a case in which a negative voltage is input to the first positive input end can be avoided. In this way, an operational amplifier to which a positive voltage can be only input at the first positive input end can be selected as the first operational amplifier. This increases a selection range of the first operational amplifier and facilitates implementation of the technical solution.

In a possible implementation, the voltage step-up unit is a power supply output by the second electronic control unit.

In a possible implementation, the position signal input circuit includes a voltage follower. An input end of the voltage follower is connected to the position sensor, and an output end of the voltage follower is connected to the differential operation circuit.

The input end of the voltage follower may be connected to the first position signal circuit. A voltage of a position signal input by the input end of the voltage follower is the same as a voltage of a position signal output by the output end.

In the technical solution provided in the present disclosure, due to the foregoing characteristics of the voltage follower, impact of the position sensor and the first signal transmission circuit on the differential operation circuit can be isolated.

In a possible implementation, the accelerator pedal position detection unit further includes a power supply transmission circuit. One end of the power supply transmission circuit is connected to a first power supply end of the first electronic control unit, and the other end is connected to the position sensor.

In the technical solution provided in the present disclosure, based on the foregoing disposition, the first power supply end of the first electronic control unit can supply power to the position sensor. In addition, the implementation is simple, and circuit complexity is low.

In a possible implementation, the accelerator pedal position detection unit further includes a first input circuit, a second input circuit, a power supply selection circuit, and an output circuit. One end of the first input circuit is connected to a first power supply end of the first electronic control unit, and the other end is connected to the power supply selection circuit. One end of the second input circuit is connected to a second power supply end of the second electronic control unit, and the other end is connected to the power supply selection circuit. One end of the output circuit is connected to the power supply selection circuit, and the other end is connected to the position sensor. The power supply selection circuit is configured to output, from the output circuit, electric energy input through the first input circuit or electric energy input through the second input circuit.

In the technical solution provided in the present disclosure, based on the foregoing disposition, when one of the first input circuit and the second input circuit fails to supply power, the electric energy can also be output through the other circuit to the position sensor. This improves reliability of supplying power to the position sensor.

In a possible implementation, the power supply selection circuit is configured to: if the electric energy fails to be input through the first input circuit, and the electric energy is normally input through the second input circuit, output, from the output circuit, the electric energy input through the second input circuit.

In a possible implementation, the power supply selection circuit is configured to: if the electric energy is normally input through the first input circuit, output, from the output circuit, the electric energy input through the first input circuit.

In a possible implementation, a voltage of an input end of the second input circuit relative to the second ground end of the second electronic control unit is equal to a voltage of an output end of the second input circuit relative to the first ground end of the first electronic control unit.

In a possible implementation, the second input circuit includes an isolation circuit. An input end of the isolation circuit is connected to the second power supply end, and an output end is connected to the power supply selection circuit. A voltage of the input end of the isolation circuit relative to the second ground end of the second electronic control unit is equal to a voltage of the output end of the isolation circuit relative to the first ground end of the first electronic control unit.

A voltage of the first power supply end of the first electronic control unit relative to the first ground end may be equal to a voltage of the second power supply end of the second electronic control unit relative to the second ground end, for example, both are 5 V.

In the technical solution provided in the present disclosure, based on the foregoing disposition, impact of the voltage difference between the first ground end and the second ground end is eliminated, so that same electric energy is output through the power supply selection circuit whether it is the electric energy input through the first input circuit or the electric energy input through the second input circuit. This improves reliability of power supply and stability of voltages collected by the first electronic control unit and the second electronic control unit.

In a possible implementation, the isolation circuit includes a primary side circuit, a transformer, and a secondary side circuit. The primary side circuit is coupled to the secondary side circuit through the transformer. The primary side circuit is connected to the second power supply end of the second electronic control unit, and is grounded by using the second ground end. The secondary side circuit is connected to the power supply selection circuit, and is grounded by using the first ground end.

In a possible implementation, a voltage conversion ratio of the transformer is 1:1.

In a possible implementation, there are two position sensors, two first signal transmission circuits, and two second signal transmission circuits. The two position sensors are connected to the first electronic control unit through the two first signal transmission circuits respectively, and the two position sensors are connected to the second electronic control unit through the two second signal transmission circuits respectively.

In the technical solution provided in the present disclosure, the two position sensors, the two first signal transmission circuits, and the two second signal transmission circuits are disposed, so that an electronic control unit (the first electronic control unit or the second electronic control unit) can control the power output of the vehicle based on position signals detected by the two position sensors. This improves control precision.

In addition, when one position sensor is faulty, the other position sensor can still transmit the position signal to the electronic control unit. This improves the reliability of the driving control system.

In a possible implementation, the position sensor, the first signal transmission circuit, and the second signal transmission circuit are integrated on a same circuit board.

In a possible implementation, the first signal transmission circuit is connected to the first electronic control unit through a first harness, and the second signal transmission circuit is connected to the second electronic control unit through a second harness.

In the technical solution provided in the present disclosure, the first harness is used to connect the position sensor to the first electronic control unit, and the second harness is used to connect the position sensor to the second electronic control unit, so that when one of the first harness and the second harness is faulty, the other harness can still transmit the position signal to a corresponding electronic control unit. This improves the reliability of a driving system.

In a possible implementation, one of the first electronic control unit and the second electronic control unit is a vehicle control unit (vehicle control unit, VCU), and the other is an autonomous driving control unit; or one of the first electronic control unit and the second electronic control unit is an engine control unit (engine management system, EMS), and the other is an autonomous driving control unit. The autonomous driving control unit is configured to: when the vehicle control unit or the engine control unit is faulty, control a power output of a vehicle based on a position signal of an accelerator pedal detected by the position sensor.

The vehicle control unit is a controller that controls an electric vehicle based on a position signal of an accelerator pedal in a manual driving mode. The engine control unit is a controller that controls a fuel vehicle based on a position signal of an accelerator pedal in a manual driving mode. The autonomous driving control unit is a controller that automatically controls a vehicle in an autonomous driving mode. The autonomous driving control unit may also be referred to as an assisted driving controller or an autonomous driving full-stack solution (autonomous driving solution, ADS) controller.

In the technical solution provided in the present disclosure, the vehicle control unit (or the engine control unit) and the autonomous driving control unit of the vehicle are selected as the first electronic control unit and the second electronic control unit, so that no new electronic control unit needs to be added to the vehicle. This reduces implementation costs and facilitates implementation of the technical solution. In addition, based on the foregoing disposition, the autonomous driving control unit is reused as a controller in the manual driving mode. This improves the reliability of the driving system.

In a possible implementation, the first electronic control unit is connected to the second electronic control unit.

According to a second aspect, the present disclosure provides an accelerator pedal position detection unit. The accelerator pedal position detection unit includes a position sensor, a first signal transmission circuit, and a second signal transmission circuit. The position sensor is connected to the first signal transmission circuit and the second signal transmission circuit. The first signal transmission circuit is configured to connect to a first electronic control unit. The second signal transmission circuit is configured to connect to a second electronic control unit.

In a possible implementation, the first signal transmission circuit includes a first position signal circuit and a first ground signal circuit. One end of the first position signal circuit is connected to the position sensor, and the other end is configured to connect to a first signal collection end of the first electronic control unit. One end of the first ground signal circuit is connected to the position sensor, and the other end is configured to connect to a first ground end of the first electronic control unit.

In a possible implementation, the second signal transmission circuit includes a second position signal circuit, a second ground signal circuit, and a differential operation circuit. The second position signal circuit includes a position signal input circuit and a position signal output circuit. The second ground signal circuit includes a first ground circuit and a second ground circuit. One end of the position signal input circuit is connected to the position sensor, and the other end is connected to the differential operation circuit. One end of the first ground circuit is connected to the position sensor, and the other end is connected to the differential operation circuit. One end of the position signal output circuit is connected to the differential operation circuit, and the other end is configured to connect to a second signal collection end of the second electronic control unit. One end of the second ground circuit is connected to the differential operation circuit, and the other end is configured to connect to a second ground end of the second electronic control unit. The differential operation circuit is configured to adjust a voltage $V1$, relative to the first ground circuit, of a position signal input through the position signal input circuit, so that a voltage $V2$, relative to the second ground circuit, of a position signal output through the position signal output circuit is in a linear relationship with $V1$.

In a possible implementation, $V2 = k \times V1 + V0$, where $V0$ is a target non-negative voltage, and $k$ is a constant greater than 0.

In a possible implementation, $k \times V1max + V0 < V1max$, where $V1max$ is a maximum value of $V1$.

In a possible implementation, the differential operation circuit includes a first operational amplifier, a first resistor, a second resistor, a third resistor, and a fourth resistor. The first operational amplifier has a first positive input end, a first negative input end, and a first operation output end. The position signal input circuit is connected to the first positive input end through the first resistor. The first ground circuit is connected to the first negative input end through the fourth resistor. The position signal output circuit is connected to the first operation output end, and the first operation output end is connected to the first negative input end through the third resistor. The second ground circuit is connected to the first positive input end through the second resistor.

In a possible implementation, the differential operation circuit further includes a voltage step-up unit and a fifth resistor. The voltage step-up unit is connected to the first positive input end through the fifth resistor. The voltage step-up unit is configured to enable a voltage input by the first positive input end to be greater than or equal to 0.

In a possible implementation, the voltage step-up unit is a power supply output by the second electronic control unit.

In a possible implementation, the position signal input circuit includes a voltage follower. An input end of the voltage follower is connected to the position sensor, and an output end of the voltage follower is connected to the differential operation circuit.

In a possible implementation, the accelerator pedal position detection unit further includes a power supply transmission circuit. One end of the power supply transmission circuit is configured to connect to a first power supply end of the first electronic control unit, and the other end is connected to the position sensor.

In a possible implementation, the accelerator pedal position detection unit further includes a first input circuit, a second input circuit, a power supply selection circuit, and an output circuit. One end of the first input circuit is configured to connect to a first power supply end of the first electronic control unit, and the other end is configured to connect to the power supply selection circuit. One end of the second input circuit is configured to connect to a second power supply end of the second electronic control unit, and the other end is connected to the power supply selection circuit. One end of the output circuit is connected to the power supply selection circuit, and the other end is connected to the position sensor. The power supply selection circuit is configured to output, from the output circuit, electric energy input through the first input circuit or electric energy input through the second input circuit.

In a possible implementation, the power supply selection circuit is configured to: if the electric energy fails to be input through the first input circuit, and the electric energy is normally input through the second input circuit, output, from the output circuit, the electric energy input through the second input circuit.

In a possible implementation, the power supply selection circuit is configured to: if the electric energy is normally input through the first input circuit, output, from the output circuit, the electric energy input through the first input circuit.

In a possible implementation, the second input circuit includes an isolation circuit. An input end of the isolation circuit is configured to connect to the second power supply end, and an output end is connected to the power supply selection circuit. A voltage of the input end of the isolation circuit relative to the second ground end of the second electronic control unit is equal to a voltage of the output end of the isolation circuit relative to the first ground end of the first electronic control unit.

In a possible implementation, the isolation circuit includes a primary side circuit, a transformer, and a secondary side circuit. The primary side circuit is coupled to the secondary side circuit through the transformer. The primary side circuit is configured to connect to the second power supply end of the second electronic control unit, and is grounded by using the second ground end. The secondary side circuit is connected to the power supply selection circuit, and is grounded by using the first ground end.

In a possible implementation, a voltage conversion ratio of the transformer is 1:1.

In a possible implementation, there are two position sensors, two first signal transmission circuits, and two second signal transmission circuits. The two position sensors are connected to the first electronic control unit through the two first signal transmission circuits respectively, and the two position sensors are connected to the second electronic control unit through the two second signal transmission circuits respectively.

In a possible implementation, the position sensor, the first signal transmission circuit, and the second signal transmission circuit are integrated on a same circuit board.

In a possible implementation, the first signal transmission circuit is configured to connect to the first electronic control unit through a first harness, and the second signal transmission circuit is configured to connect to the second electronic control unit through a second harness.

In a possible implementation, one of the first electronic control unit and the second electronic control unit is a vehicle control unit, and the other is an autonomous driving control unit; or one of the first electronic control unit and the second electronic control unit is an engine control unit, and the other is an autonomous driving control unit. The autonomous driving control unit is configured to: when the vehicle control unit or the engine control unit is faulty, control a power output of a vehicle based on a position signal of an accelerator pedal detected by the position sensor.

According to a third aspect, the present disclosure provides an accelerator pedal. The accelerator pedal includes an accelerator pedal mechanical part and the accelerator pedal position detection unit according to any implementation of the second aspect.

According to a fourth aspect, the present disclosure provides a vehicle. The vehicle includes the driving control system according to any implementation of the first aspect.

According to a fifth aspect, the present disclosure provides a driving control method. The driving control method is applied to the driving control system according to any implementation of the first aspect. The driving control method includes: A second electronic control unit detects that a first electronic control unit is faulty. The second electronic control unit controls a power output of a vehicle based on a position signal received through a second signal transmission circuit.

In the technical solution provided in the present disclosure, based on the foregoing disposition, when the first electronic control unit is faulty, the second electronic control unit can also control the power output of the vehicle based on a position signal of an accelerator pedal. This improves reliability of the vehicle.

In a possible implementation, before the second electronic control unit controls the power output of the vehicle based on the position signal received through the second signal transmission circuit, the driving control method further includes: restarting the vehicle after the second electronic control unit detects that the vehicle is turned off.

In the technical solution provided in the present disclosure, after the first electronic control unit is faulty, when the vehicle is restarted after being turned off, the second electronic control unit takes over power output control of the vehicle. This can improve driving safety of the vehicle, and avoid a case in which when a driver rapidly presses the accelerator pedal due to a failure of pressing the accelerator pedal, the second electronic control unit suddenly takes over power output control of the vehicle, resulting in instantaneous acceleration of the vehicle.

In a possible implementation, the driving control method further includes: When the first electronic control unit is normal, the first electronic control unit controls the power output of the vehicle based on a position signal received through a first signal transmission circuit.

In a possible implementation, after the second electronic control unit controls the power output of the vehicle based on the position signal received through the second signal transmission circuit, the driving control method further includes: When the first electronic control unit is normal, the first electronic control unit controls the power output of the vehicle based on the position signal received through the first signal transmission circuit.

In a possible implementation, before the first electronic control unit controls the power output of the vehicle based on the position signal received through the first signal transmission circuit, the driving control method further includes: restarting the vehicle after the first electronic control unit detects that the vehicle is turned off.

According to a sixth aspect, the present disclosure provides a driving control method. The driving control method is applied to a second electronic control unit of the driving control system according to any implementation of the first aspect. The driving control method includes: detecting that a first electronic control unit is faulty; and controlling a power output of a vehicle based on a position signal received through a second signal transmission circuit.

When the first electronic control unit is normal, the first electronic control unit may control the power output of the vehicle.

In the technical solution provided in the present disclosure, based on the foregoing disposition, when the first electronic control unit is faulty, the second electronic control unit can also control the power output of the vehicle based on the position signal of an accelerator pedal. This improves reliability of the vehicle.

In a possible implementation, before the controlling a power output of a vehicle based on a position signal received through a second signal transmission circuit, the method further includes: restarting the vehicle after detecting that the vehicle is turned off.

In the technical solution provided in the present disclosure, after the first electronic control unit is faulty, when the vehicle is restarted after being turned off, the second electronic control unit takes over power output control of the vehicle. This can improve driving safety of the vehicle, and avoid a case in which when a driver rapidly presses the accelerator pedal due to a failure of pressing the accelerator pedal, the second electronic control unit suddenly takes over power output control of the vehicle, resulting in instantaneous acceleration of the vehicle.

According to a seventh aspect, the present disclosure provides a driving control apparatus. The driving control apparatus is configured in a second electronic control unit of the driving control system according to any implementation of the first aspect. The driving control apparatus includes:

a detection module, configured to detect that a first electronic control unit is faulty; and
a control module, configured to control a power output of a vehicle based on a position signal received through a second signal transmission circuit.

In a possible implementation, before the control module controls the power output of the vehicle based on the position signal received through the second signal transmission circuit, the detection module is further configured to restart the vehicle after detecting that the vehicle is turned off.

According to an eighth aspect, the present disclosure provides a computer-readable storage medium. The computer-readable storage medium stores at least one instruction. The instruction is loaded and executed by a controller to implement the driving control method according to any implementation of the sixth aspect.

According to a ninth aspect, the present disclosure provides a computer program product. The computer program product includes at least one instruction. The instruction is executed by an electronic control unit, to enable the electronic control unit to implement the driving control method according to any implementation of the sixth aspect.

According to a tenth aspect, the present disclosure provides a chip. The chip includes a controller. The controller is configured to invoke, from a memory, and run instructions stored in the memory, to enable an electronic control unit in which the chip is installed to perform the driving control method according to any implementation of the sixth aspect.

According to an eleventh aspect, the present disclosure provides another chip. The chip includes an input interface, an output interface, a controller, and a memory. The input interface, the output interface, the controller, and the memory are connected through an internal connection path. The controller is configured to execute code in the memory. When the code is executed, the controller is configured to perform the driving control method according to any implementation of the sixth aspect.

According to a twelfth aspect, the present disclosure provides an electronic control unit. The electronic control unit includes a controller. The controller is coupled to a memory. The memory stores at least one instruction. The at least one instruction is loaded and executed by the controller, to implement the driving control method according to any implementation of the sixth aspect.

**BRIEF DESCRIPTION OF DRAWINGS**

FIG. 1 is a diagram of a driving control system for an electric vehicle according to an embodiment of the present disclosure;

FIG. 2 is a diagram of a driving control system of a fuel vehicle according to an embodiment of the present disclosure;

FIG. 3 is a diagram of a driving control system according to an embodiment of the present disclosure;

FIG. 4 is a diagram of a driving control system according to an embodiment of the present disclosure;

FIG. 5 is a schematic of a differential operation circuit according to an embodiment of the present disclosure;

FIG. 6 is a schematic of a differential operation circuit according to an embodiment of the present disclosure;

FIG. 7 is a schematic of a differential operation circuit according to an embodiment of the present disclosure;

FIG. 8 is a schematic of a differential operation circuit according to an embodiment of the present disclosure;

FIG. 9 is a schematic of a differential operation circuit according to an embodiment of the present disclosure;

FIG. 10 is a diagram of a driving control system according to an embodiment of the present disclosure;

FIG. 11 is a diagram of a voltage follower according to an embodiment of the present disclosure;

FIG. 12 is a diagram of a voltage follower according to an embodiment of the present disclosure;

FIG. 13 is a diagram of a driving control system according to an embodiment of the present disclosure;

FIG. 14 is a schematic of a power supply selection circuit according to an embodiment of the present disclosure;

FIG. 15 is a schematic of a power supply selection circuit according to an embodiment of the present disclosure;

FIG. 16 is a diagram of a driving control system according to an embodiment of the present disclosure;

FIG. 17 is a schematic of an isolation circuit according to an embodiment of the present disclosure;

FIG. 18 is a diagram of a driving control system according to an embodiment of the present disclosure;

FIG. 19 is a diagram of a driving control system of an electric vehicle according to an embodiment of the present disclosure;

FIG. 20 is a diagram of a driving control system of a fuel vehicle according to an embodiment of the present disclosure;

FIG. 21 is a flowchart of a driving control method according to an embodiment of the present disclosure;

FIG. 22 is a flowchart of a driving control method according to an embodiment of the present disclosure;

FIG. 23 is a diagram of a driving control apparatus according to an embodiment of the present disclosure; and

FIG. 24 is a diagram of an electronic control unit according to an embodiment of the present disclosure.

Reference numerals:

1: accelerator pedal position detection unit; 10: circuit board; 11: position sensor;

12: first signal transmission circuit; 121: first position signal circuit; 122: first ground signal circuit;

13: second signal transmission circuit; 131: second position signal circuit; 1311: position signal input circuit; 13111: voltage follower; 131111: second operational amplifier; 131111a: second positive input end; 131111b: second negative input end; 131111c: second operation output end; 1312: position signal output circuit;

132: second ground signal circuit; 1321: first ground circuit; 1322: second ground circuit;

133: differential operation circuit; 1331: first operational amplifier; 1331a: first positive input end; 1331b: first negative input end; 1331c: first operation output end; 1332: first resistor; 1333: second resistor; 1334: third resistor; 1335: fourth resistor; 1336: voltage step-up unit; 1337: fifth resistor;

14: operational amplifier power supply circuit;

15: power supply transmission circuit;

16: first input circuit; 17: second input circuit; 170: isolation circuit; 171: primary side circuit; 172: transformer; 173: secondary side circuit; 18: power supply selection circuit; 181: NMOS transistor; 182: first PMOS transistor; 183: second PMOS transistor; 184: sixth resistor; 185: seventh resistor; 19: output circuit;

2: first electronic control unit; 21: first signal collection end; 22: first ground end; 23: first power supply end;

3: second electronic control unit; 31: second signal collection end; 32: second ground end; 33: second power supply end;

4: vehicle frame.

**DESCRIPTION OF EMBODIMENTS**

An accelerator pedal is a component of a driving control system. In a process of driving a vehicle, a driver controls a power output of the vehicle by controlling an angle at which the accelerator pedal is pressed, to complete control of a vehicle speed.

To implement the foregoing function, in the conventional technology, a position sensor is disposed in an accelerator pedal, and the position sensor is connected to an electronic control unit (electronic control unit, ECU). The position sensor is configured to detect a position of the accelerator pedal (for example, an angle at which the accelerator pedal is pressed), and output a position signal of the accelerator pedal to the electronic control unit. The electronic control unit is configured to control a power output of a vehicle based on the position signal of the accelerator pedal.

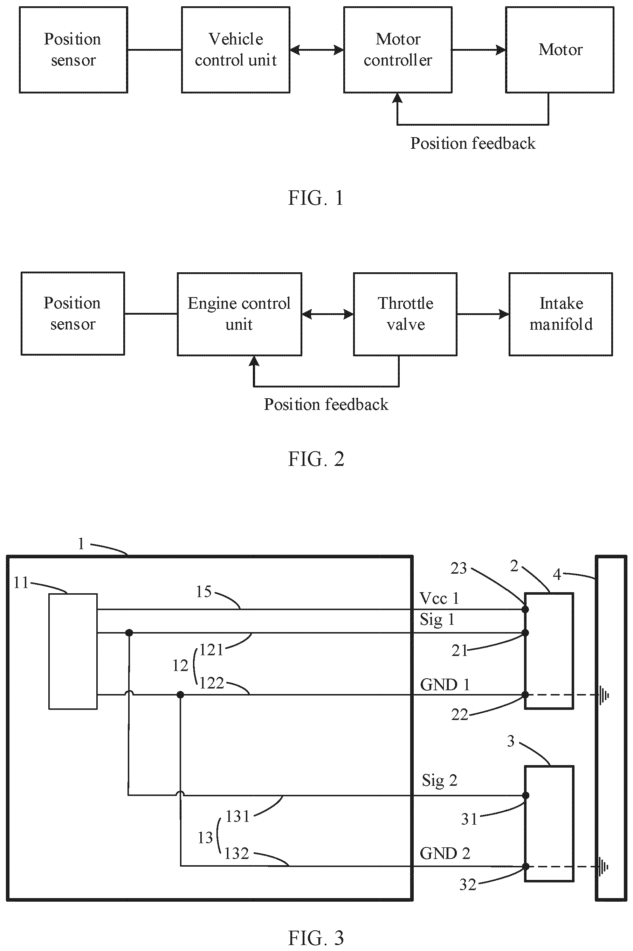

As shown in FIG. 1, for an electric vehicle, an electronic control unit is a vehicle control unit (vehicle control unit, VCU). The vehicle control unit sends a torque control signal to a motor controller based on a position signal of an accelerator pedal detected by a position sensor, and the motor controller controls torque of a motor based on the torque control signal, to complete control of a vehicle speed.

As shown in FIG. 2, for a fuel vehicle, an electronic control unit is an engine control unit (engine management system, EMS). The engine control unit controls opening of a throttle valve based on a position signal of an accelerator pedal detected by a position sensor, to complete control of a vehicle speed.

However, regardless of an electric vehicle or a fuel vehicle, if the electronic control unit (the vehicle control unit or the engine control unit) is faulty, the vehicle cannot travel normally, causing poor reliability of the vehicle.

In view of the foregoing technical problem, an embodiment of the present disclosure provides a driving control system. In the driving control system, a position sensor is connected to two electronic control units, so that when one electronic control unit is faulty, the other electronic control unit can also control a power output of a vehicle based on a position signal detected by the position sensor. This improves reliability of the vehicle.

The following describes an example of the driving control system provided in this embodiment of the present disclosure.

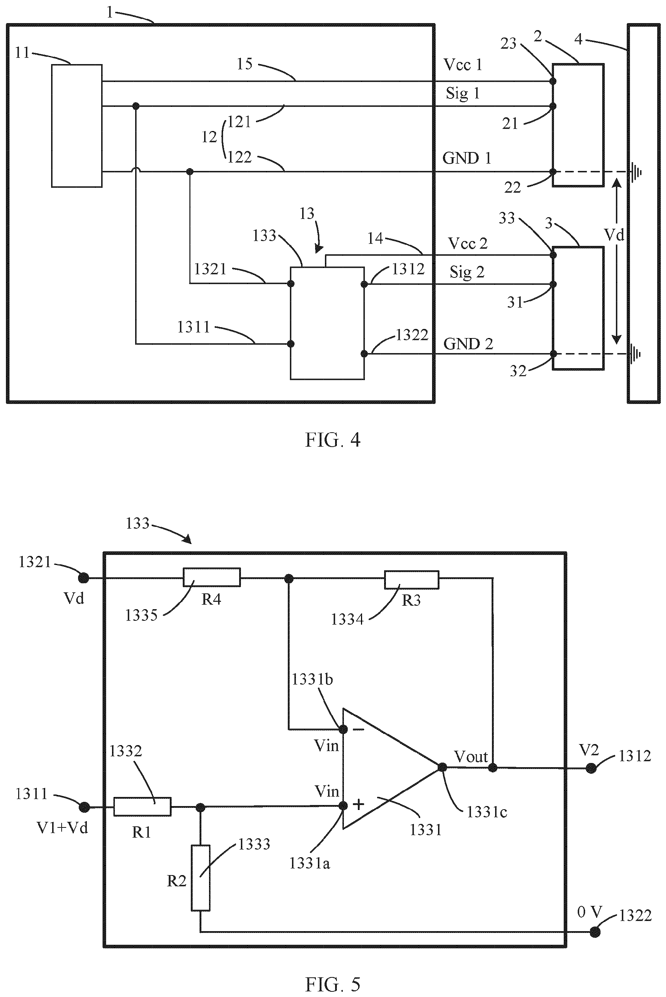

As shown in FIG. 3 and FIG. 4, the driving control system includes an accelerator pedal position detection unit 1, a first electronic control unit 2, and a second electronic control unit 3. The accelerator pedal position detection unit 1 includes a position sensor 11, a first signal transmission circuit 12, and a second signal transmission circuit 13. The position sensor 11 is connected to the first electronic control unit 2 through the first signal transmission circuit 12, and is connected to the second electronic control unit 3 through the second signal transmission circuit 13.

The position sensor 11 is configured to detect a position signal of an accelerator pedal, for example, an angle at which the accelerator pedal is pressed. A type of the position sensor 11 is not limited in embodiments of the present disclosure. In some examples, the position sensor 11 is a resistive sensor. In some other examples, the position sensor 11 is a non-contact sensor, for example, a Hall effect sensor.

The first signal transmission circuit 12 is configured to transmit the position signal detected by the position sensor 11 to the first electronic control unit 2. The second signal transmission circuit 13 is configured to transmit the position signal detected by the position sensor 11 to the second electronic control unit 3.

The first electronic control unit 2 and the second electronic control unit 3 each are configured to control a power output of a vehicle based on the position signal of the accelerator pedal. In addition, when one of the first electronic control unit 2 and the second electronic control unit 3 is faulty, the other electronic control unit can still operate normally.

In the technical solution provided in this embodiment of the present disclosure, based on the foregoing disposition, the position signal of the accelerator pedal detected by the position sensor 11 can be transmitted to the first electronic control unit 2 and the second electronic control unit 3 through the first signal transmission circuit 12 and the second signal transmission circuit 13 respectively. In this way, when one of the first electronic control unit 2 and the second electronic control unit 3 is faulty, the other electronic control unit can also control the vehicle based on the position signal of the accelerator pedal. This improves reliability of the driving control system and reliability of the vehicle.

The following describes examples of implementations of the first signal transmission circuit 12 and the second signal transmission circuit 13 provided in this embodiment of the present disclosure.

First signal transmission circuit 12:

In some examples, as shown in FIG. 3 and FIG. 4, the first signal transmission circuit 12 includes a first position signal circuit 121 and a first ground signal circuit 122. One end of the first position signal circuit 121 is connected to the position sensor 11, and the other end is connected to a first signal collection end 21 of the first electronic control unit 2. One end of the first ground signal circuit 122 is connected to the position sensor 11, and the other end is connected to a first ground end 22 of the first electronic control unit 2.

The first ground end 22 of the first electronic control unit 2 is grounded. An implementation in which the first ground end 22 is grounded is not limited in embodiments of the present disclosure. In some examples, as shown in FIG. 3, the first ground end 22 is connected to a vehicle frame 4. For example, the first ground end 22 may be connected to the vehicle frame 4 by putting up vehicle body iron. In this case, the first ground end 22 is grounded by using the vehicle frame 4.

The first signal collection end 21 of the first electronic control unit 2 is configured to collect a position signal output through the first position signal circuit 121. The position signal is a voltage of the signal, and a reference ground of the voltage is the first ground end 22.

If the first electronic control unit 2 controls the power output of the vehicle, when a driver presses the accelerator pedal, a status of the first position sensor 11 changes. In this case, the voltage output through the first position signal circuit 121 changes, and the first electronic control unit 2 collects the voltage, and controls the power output of the vehicle based on a change of the voltage.

Second signal transmission circuit 13:

In some examples, as shown in FIG. 3, the second signal transmission circuit 13 includes a second position signal circuit 131 and a second ground signal circuit 132. One end of the second position signal circuit 131 is connected to the position sensor 11, and the other end is connected to a second signal collection end 31 of the second electronic control unit 3. One end of the second ground signal circuit 132 is connected to the position sensor 11, and the other end is grounded with a second ground end 32 of the second electronic control unit 3.

In some examples, as shown in FIG. 3, the second position signal circuit 131 is connected to the first position signal circuit 121, and the second ground signal circuit 132 is connected to the first ground signal circuit 122.

The second ground end 32 of the second electronic control unit 3 is grounded. An implementation in which the second ground end 32 is grounded is not limited in embodiments of the present disclosure. In some examples, as shown in FIG. 3, the second ground end 32 is connected to the vehicle frame 4. For example, the second ground end 32 may be connected to the vehicle frame 4 by putting up vehicle body iron. In this case, the second ground end 32 is grounded by using the vehicle frame 4.

The second signal collection end 31 of the second electronic control unit 3 is configured to collect a position signal output through the second position signal circuit 131. The position signal is a voltage of the signal output through the second position signal circuit 131, and a reference ground of the voltage is the second ground end 32.

If the second electronic control unit 3 controls the power output of the vehicle, when the driver presses the accelerator pedal, the status of the first position sensor 11 changes. In this case, the voltage output through the second position signal circuit 131 changes, and the second electronic control unit 3 collects the voltage, and controls the power output of the vehicle based on a change of the voltage.

It should be noted that, because the first ground end 22 of the first electronic control unit 2 and the second ground end 32 of the second electronic control unit 3 are usually grounded by using different ground points of the vehicle frame 4, the first ground end 22 and the second ground end 32 may not be at an equal potential, and there may be a voltage difference. Based on related provisions of a ground potential difference between internal components of a vehicle in the vehicle standard ISO 16750, a maximum allowed voltage difference is 1 V.

The first position signal circuit 121 is connected to the second position signal circuit 131. In this case, a potential of the first position signal circuit 121 is the same as a potential of the second position signal circuit 131, and the first signal collection end 21 of the first electronic control unit 2 and the second signal collection end 31 of the second electronic control unit 3 are at an equal potential. However, if reference grounds of the first signal collection end 21 and the second signal collection end 31 are different (that is, there is a ground potential difference between the first ground end 22 and the second ground end 32), voltages collected by the first electronic control unit 2 and the second electronic control unit 3 are also different.

For example, it is assumed that a voltage of the first ground end 22 relative to the second ground end 32 is Vd. If the voltage collected by the first electronic control unit 2 is V1 (that is, a voltage of the first signal collection end 21 relative to the first ground end 22 is V1), the voltage collected by the second electronic control unit 3 is V2=V1+Vd (that is, a voltage of the second signal collection end 31 relative to the second ground end 32 is V2=V1+Vd). During actual application, Vd changes with time. Therefore, in a case of same V1, a specific value of V2 is uncertain.

In the technical solution shown in FIG. 3, the first ground end 22 and the second ground end 32 are directly short-circuited. Due to Vd, the collected position signal has an irregular deviation (a potential of the ground end is unclear), and V2 may be less than 0 V. For example, if V1=0.5 V, and Vd=-1 V, V2=-0.5 V. If the second electronic control unit 3 cannot collect a negative voltage, the second electronic control unit 3 cannot operate normally.

To resolve at least some of the foregoing technical problems, in some examples, Vd may be set to be equal to 0 V, that is, the first ground end 22 and the second ground end 32 are set to be at an equal potential. In this case, the technical solution shown in FIG. 3 may be normally used.

In some other examples, as shown in FIG. 4, a differential operation circuit 133 may alternatively be disposed to adjust the voltage of the position signal output to the second electronic control unit 3, to eliminate impact of Vd.

For example, as shown in FIG. 4, the second signal transmission circuit 13 includes a second position signal circuit 131, a second ground signal circuit 132, and a differential operation circuit 133. The second position signal circuit 131 includes a position signal input circuit 1311 and a position signal output circuit 1312. The second ground signal circuit 132 includes a first ground circuit 1321 and a second ground circuit 1322. One end of the position signal input circuit 1311 is connected to the position sensor 11, and the other end is connected to the differential operation circuit 133. One end of the first ground circuit 1321 is connected to the position sensor 11, and the other end is connected to the differential operation circuit 133. One end of the position signal output circuit 1312 is connected to the differential operation circuit 133, and the other end is connected to a second signal collection end 31 of the second electronic control unit 3. One end of the second ground circuit 1322 is connected to the differential operation circuit 133, and the other end is connected to a second ground end 32 of the second electronic control unit 3. The differential operation circuit 133 is configured to adjust a voltage V1, relative to the first ground circuit 1321, of a position signal input through the position signal input circuit 1311, so that a voltage V2, relative to the second ground circuit 1322, of a position signal output through the position signal output circuit 1312 is in a linear relationship with V1.

As shown in FIG. 4, the position signal input circuit 1311 may be connected to the first position signal circuit 121, and the first ground circuit 1321 may be connected to the first ground signal circuit 122. In this case, the position signal input circuit 1311 and the first position signal circuit 121 are at an equal potential, and the first ground circuit 1321 and the first ground signal circuit 122 are at an equal potential. Therefore, the voltage, relative to the first ground circuit 1321, of the position signal input through the position signal input circuit 1311 is equal to a voltage of the first position signal circuit 121 relative to the first ground signal circuit 122. It is assumed that the voltage is V1, and V1 is a voltage collected by the first signal collection end 21 of the first electronic control unit 2.

In the technical solution provided in this embodiment of the present disclosure, V2 collected by the second signal collection end 31 of the second electronic control unit 3 is set to be in the linear relationship with V1 collected by the first signal collection end 21 of the first electronic control unit 2, to eliminate impact of Vd, so that V2 and V1 are in one-to-one correspondence with positions of the accelerator pedal. In this way, the position of the accelerator pedal determined by the second electronic control unit 3 based on V2 is more accurate.

In some examples, $V2=k\times V1+V0$, where V0 is a target non-negative voltage, and k is a constant greater than 0.

Because k is a constant greater than 0, V0 is a non-negative voltage value, and V1 is greater than or equal to 0, V2 is also greater than or equal to 0, and V2 is a non-negative voltage value, so that the second electronic control unit 3 collects no negative voltage.

In addition, because there is no impact of another unknown parameter (for example, Vd) in the relational expression, V2 and V1 are in one-to-one correspondence with the positions of the accelerator pedal. In this way, the position of the accelerator pedal determined by the second electronic control unit 3 based on V2 is more accurate.

In addition, assuming that a maximum voltage that can be collected by the second electronic control unit 3 is V2max, $k\times V1max+V0$ should be less than or equal to V2max, where V1max is a maximum voltage, relative to the first ground end 22, of the position signal output through the first position signal circuit 121.

Generally, maximum voltages that can be collected by the first electronic control unit 2 and the second electronic control unit 3 are the same, that is, V1max=V2max. Therefore, $k\times V1max+V0\leq V1max$.

The following describes an example of an implementation of the differential operation circuit 133.

As shown in FIG. 5, the differential operation circuit 133 includes a first operational amplifier 1331, a first resistor 1332, a second resistor 1333, a third resistor 1334, and a fourth resistor 1335. The first operational amplifier 1331 has a first positive input end 1331a, a first negative input end 1331b, and a first operation output end 1331c. The position signal input circuit 1311 is connected to the first positive input end 1331a through the first resistor 1332. The first ground circuit 1321 is connected to the first negative input end 1331b through the fourth resistor 1335. The position signal output circuit 1312 is connected to the first operation output end 1331c, and the first operation output end 1331c is connected to the first negative input end 1331b through the third resistor 1334. The second ground circuit 1322 is connected to the first positive input end 1331a through the second resistor 1333.

A resistance value of the first resistor 1332 is R1, a resistance value of the second resistor 1333 is R2, a resistance value of the third resistor 1334 is R3, and a resistance value of the fourth resistor 1335 is R4. Assuming that a voltage of the second ground end 32 is 0 V, and a voltage of the first ground end 22 is Vd (that is, a voltage difference between the first ground end 22 and the second ground end 32 is Vd), a voltage input through the first ground circuit 1321 is Vd, and a voltage input through the position signal input circuit 1311 is V1+Vd.

The operational amplifier (the first operational amplifier 1331) has the following features. Potentials of the first positive input end 1331a and the first negative input end 1331b of the first operational amplifier 1331 are the same (assuming that voltages relative to the second ground end 32 are both Vin). In addition, a current between the first positive input end 1331a and the first negative input end 1331b is 0.

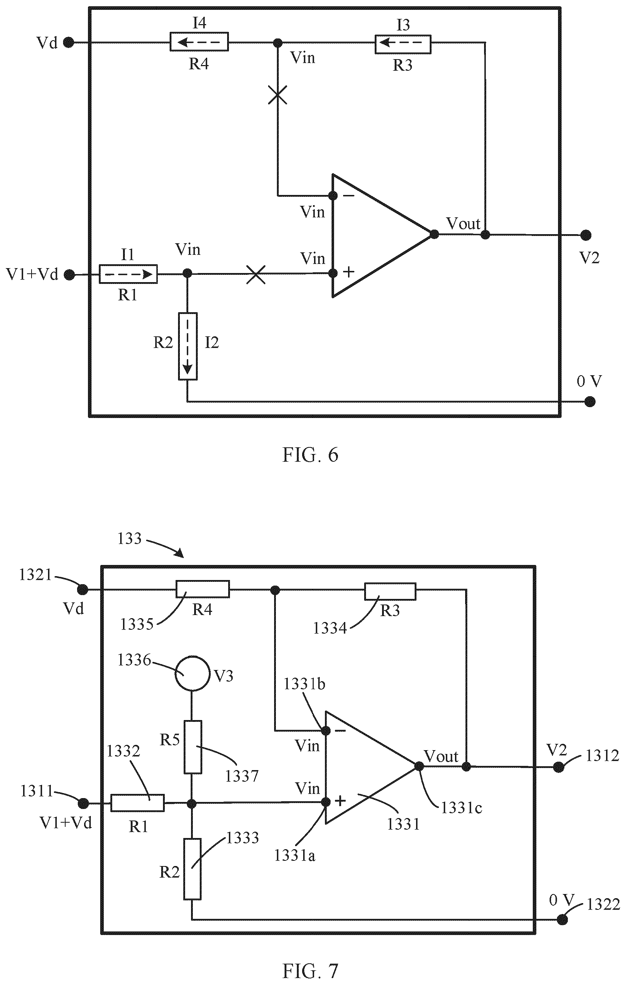

Based on the foregoing features, a current status of the differential operation circuit 133 is shown in FIG. 6. "X" in FIG. 6 indicates that no current passes through the circuit. In this case, the following relational expressions exist: I1=I2, and

I3=I4. $I1 = \dfrac{V1 + Vd - Vin}{R1}$, $I2 = \dfrac{Vin}{R2}$, and they may be substituted into the formula I1=I2 to obtain

$$\frac{V1 + Vd - Vin}{R1} = \frac{Vin}{R2} .$$

Further, it is deduced that

$$Vin = \frac{(V1 + Vd) \cdot R2}{R1 + R2} \quad (1).$$

$I3 = \dfrac{V2 - Vin}{R3}$, $I4 = \dfrac{Vin - Vd}{R4}$ , and they may be substituted into the formula I3=I4 to obtain $\dfrac{V2 - Vin}{R3} = \dfrac{Vin - Vd}{R4}$ .

Further, it is deduced that

$$V2 = (1 + \frac{R3}{R4}) Vin - \frac{R3}{R4} Vd \quad (2).$$

Formula (1) is substituted into Formula (2) to obtain a relational expression of V2 and V1:
$$\frac{(R4 + R3) \times R2}{R4(R1 + R2)} \cdot V1 + [\frac{(R4 + R3) \times R2}{R4(R1 + R2)} - \frac{R3}{R4}] \cdot Vd$$

To eliminate impact of Vd in the relational expression of V2 and V1, it is set that $[\dfrac{(R4 + R3) \times R2}{R4(R1 + R2)} - \dfrac{R3}{R4}] \cdot Vd = 0$ . In other words, R1, R2, R3, and R4 satisfy the following relational expression: $\dfrac{(R4 + R3) \times R2}{R4(R1 + R2)} = \dfrac{R3}{R4}$ .

Further, it is deduced that the relational expression of V2 and V1 may be transformed into $V2 = \dfrac{R3}{R4} \cdot V1$ , where $\dfrac{R3}{R4}$ is k, and in circuit diagrams shown in FIG. 5 and FIG. 6, V0=0 V.

Specific values of R1, R2, R3, and R4 are not limited in embodiments of the present disclosure. In some examples, if R1=10 kΩ, R2=10 kΩ, R3=10 kΩ, and R4=10 Ω, V2 = V1.

It should be noted that, for the differential operation circuit 133 shown in FIG. 5 and FIG. 6, a negative voltage may be input to the first positive input end 1331a of the first operational amplifier 1331. For example, if V1=0.5 V, and Vd=-1 V, Vin<0.

To prevent an input negative voltage from affecting normal operation of the first operational amplifier 1331, an operational amplifier to which a negative voltage can be allowed to be input needs to be selected as the first operational amplifier 1331.

Certainly, in some other examples, Vin may also be increased, so that a case in which a negative voltage is input to the first positive input end 1331a of the first operational amplifier 1331 can be avoided. This extends a selection range of the first operational amplifier 1331.

For example, as shown in FIG. 7, the differential operation circuit 133 further includes a voltage step-up unit 1336 and a fifth resistor 1337. The voltage step-up unit 1336 is connected to the first positive input end 1331a through the fifth resistor 1337.

A resistance value of the fifth resistor 1337 is R5, and a voltage of the voltage step-up unit 1336 relative to the second ground end 32 is V3.

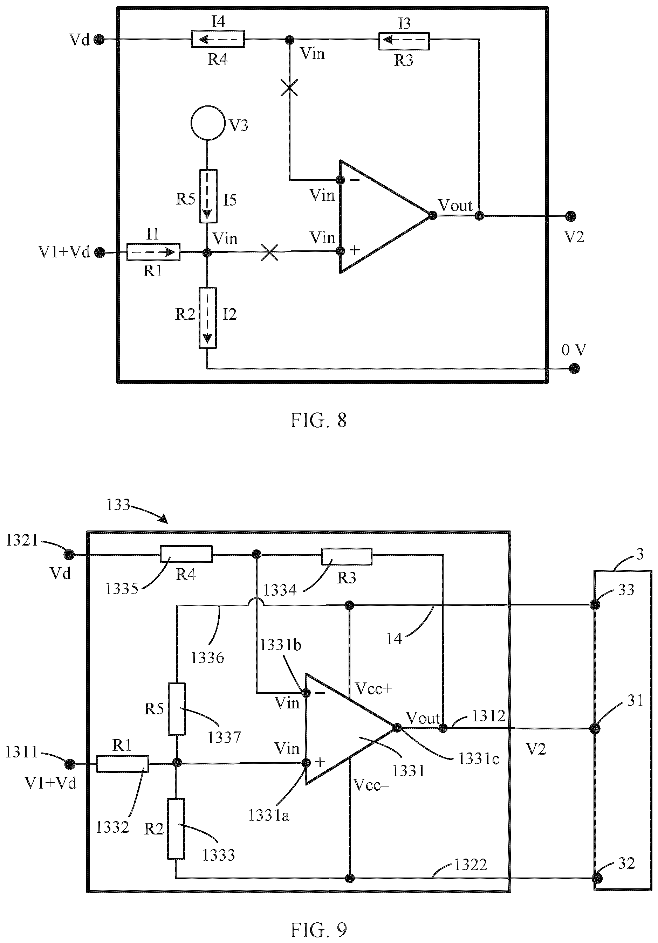

Based on the foregoing features of the operational amplifier, the current status of the differential operation circuit 133 is shown in FIG. 8. "X" in FIG. 8 indicates that no current passes through the circuit. In this case, the following relational expressions exist: I1+I5=I2, and I3=I4. $I1 = \dfrac{V1 + Vd - Vin}{R1}$ , $I5 = \dfrac{V3 - Vin}{R5}$ , $I2 = \dfrac{Vin}{R2}$ , and they may be substituted into the formula I1+I5=I2 to obtain $\dfrac{V1+Vd-Vin}{R1}+\dfrac{V3-Vin}{R5}=\dfrac{Vin}{R2}$ . Further, it is deduced that

$$Vin=\dfrac{(V1+Vd)\cdot R5\cdot R2+V3\cdot R1\cdot R2}{R1\cdot R5+R1\cdot R2+R5\cdot R2}\ (3).$$

Formula (3) is substituted into Formula (2) to obtain a relational expression of V2 and V1:

$$V2=\dfrac{(R3+R4)\cdot R5\cdot R2}{R4(R1\cdot R5+R1\cdot R2+R5\cdot R2)}\cdot V1+\dfrac{(R3+R4)\cdot R1\cdot R2}{R4(R1\cdot R5+R1\cdot R2+R5\cdot R2)}\cdot V3+$$

$$[\dfrac{(R3+R4)\cdot R5\cdot R2}{R4(R1\cdot R5+R1\cdot R2+R5\cdot R2)}-\dfrac{R3}{R4}]\cdot Vd$$

To eliminate impact of Vd in the relational expression of V2 and V1, it is set that $[\dfrac{(R3+R4)\cdot R5\cdot R2}{R4(R1\cdot R5+R1\cdot R2+R5\cdot R2)}-\dfrac{R3}{R4}]\cdot Vd=0$ . In other words, R1, R2, R3, R4, and R5 satisfy the following relational expression: $\dfrac{(R3+R4)\cdot R5\cdot R2}{R4(R1\cdot R5+R1\cdot R2+R5\cdot R2)}=\dfrac{R3}{R4}$ .

Further, it is deduced that the relational expression of V2 and V1 may be transformed into $V2=\dfrac{R3}{R4}\cdot V1+\dfrac{R3}{R4}\cdot\dfrac{R1}{R5}\cdot V3$ , where - is k, and $\dfrac{R3}{R4}\cdot\dfrac{R1}{R5}\cdot V3$ is V0.

Specific values of R1, R2, R3, R4, and R5 are not limited in embodiments of the present disclosure. In some examples, if R1=10 kΩ, R2=10 kΩ, R3=8 kΩ, R4=10 kΩ, and R5=40 kΩ, V2 = 0.8V1 + 0.2V3 .

A specific value of V3 is not limited in embodiments of the present disclosure, provided that V3 can enable Vin not to be a negative voltage. In some examples, if V3=5 V, V2=0.8V1+1 V.

A source of the voltage step-up unit 1336 is not limited in embodiments of the present disclosure. In some examples, as shown in FIG. 9, the voltage step-up unit 1336 is a power supply output by a second power supply end 33 of the second electronic control unit 3.

In addition, the first operational amplifier 1331 can be used only when power is supplied. As shown in FIG. 9, a negative power supply end (Vcc-) of the first operational amplifier 1331 is connected to the second ground end 32, and a positive power supply end (Vcc+) is connected to the second power supply end 33 through an operational amplifier power supply circuit 14.

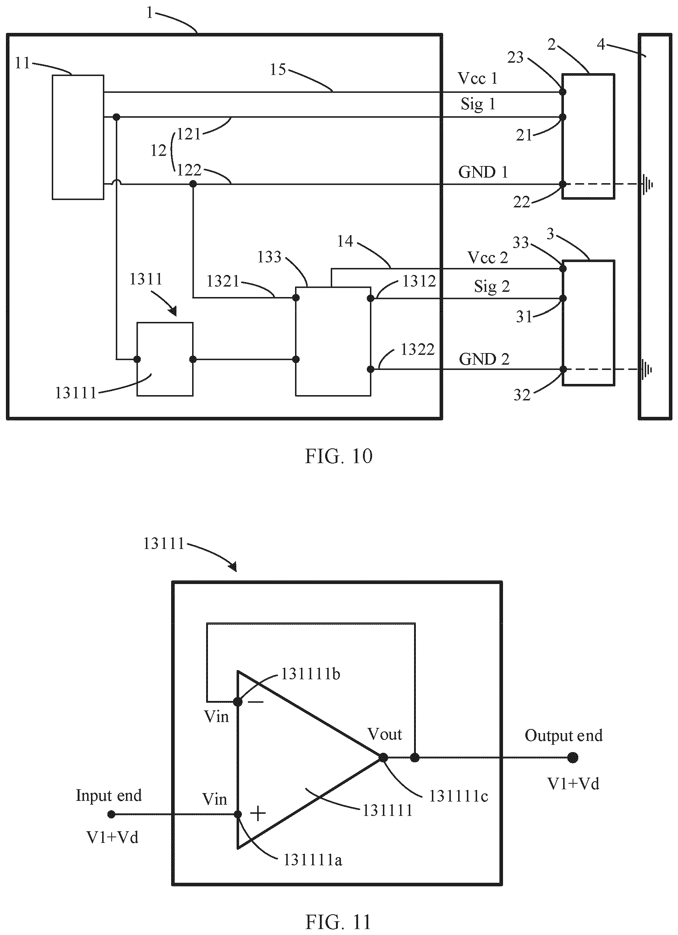

In some examples, as shown in FIG. 10, the position signal input circuit 1311 includes a voltage follower 13111. An input end of the voltage follower 13111 is connected to the position sensor 11, and an output end of the voltage follower 13111 is connected to the differential operation circuit 133.

The voltage follower 13111 may be connected to the first position signal circuit 121, and a voltage of a position signal input by the input end of the voltage follower 13111 is equal to a voltage of an output position signal.

The voltage follower 13111 can isolate the position sensor 11 from the differential operation circuit 133, to prevent the first position signal circuit 121 and the position sensor 11 from affecting the differential operation circuit 133.

The following describes an example of an implementation of the voltage follower 13111.

As shown in FIG. 11, the voltage follower 13111 includes a second operational amplifier 131111. The second operational amplifier 131111 includes a second positive input end 131111a, a second negative input end 131111b, and a second operation output end 131111c. The position sensor 11 is connected to the second positive input end 131111a, the second operation output end 131111c is connected to the second negative input end 131111b, and the second operation output end 131111c is connected to the differential operation circuit 133.

With reference to the foregoing features of the operational amplifier, it can be learned that potentials of the second positive input end 131111a and the second negative input end 131111b are the same, and both are Vin. In addition, potentials of the second operation output end 131111c and the second negative input end 131111b are the same, that is, Vout=Vin.

A voltage, relative to the first ground end 22, of a signal input by the second positive input end 131111a is V1, and a voltage, relative to the second ground end 32, of the signal input by the second positive input end 131111a is V1+Vd. In this case, Vout=Vin=V1+Vd. In other words, a voltage input by the second operation output end 131111c to the differential operation circuit 133 is V1+Vd. It can be seen that the voltage follower 13111 does not affect a magnitude of the voltage output through the position signal input circuit 1311 to the differential operation circuit 133.

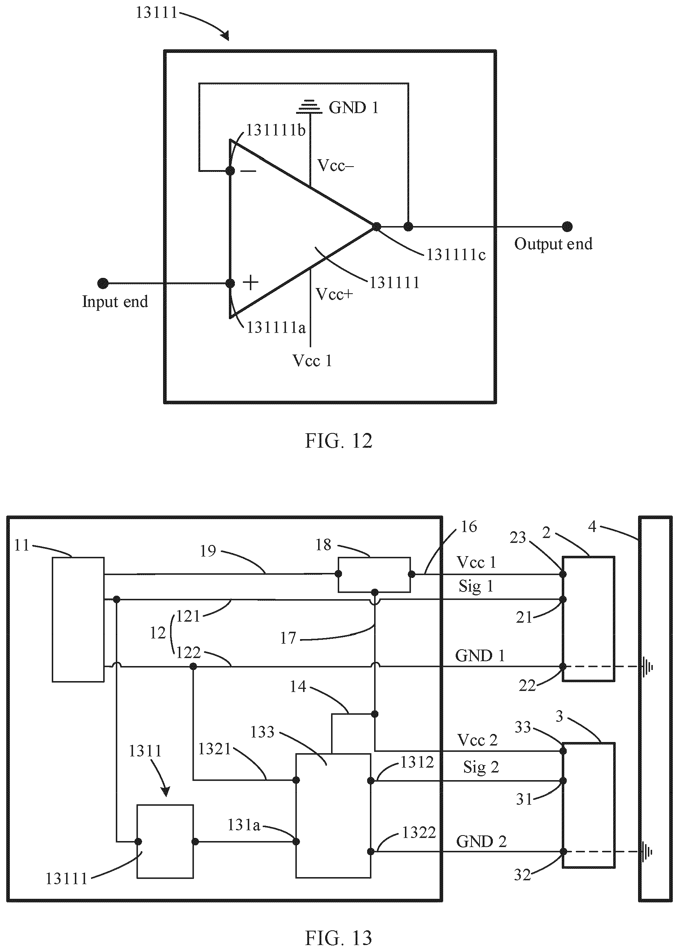

In addition, the second operational amplifier 131111 can be used only when power is supplied. As shown in FIG. 12, a negative power supply end (Vcc-) of the second operational amplifier 131111 is connected to the first ground end 22, and a positive power supply end (Vcc+) is connected to a first power supply end 23 of the first electronic control unit 2.

The following describes a manner of supplying power to the position sensor 11.

In some examples, as shown in FIG. 3, FIG. 4, and FIG. 10, the accelerator pedal position detection unit 1 further includes a power supply transmission circuit 15. One end of the power supply transmission circuit 15 is connected to a first power supply end 23 of the first electronic control unit 2, and the other end is connected to the position sensor 11. In this case, the first power supply end 23 of the first electronic control unit 2 may supply power to the position sensor 11 through the power supply transmission circuit 15.

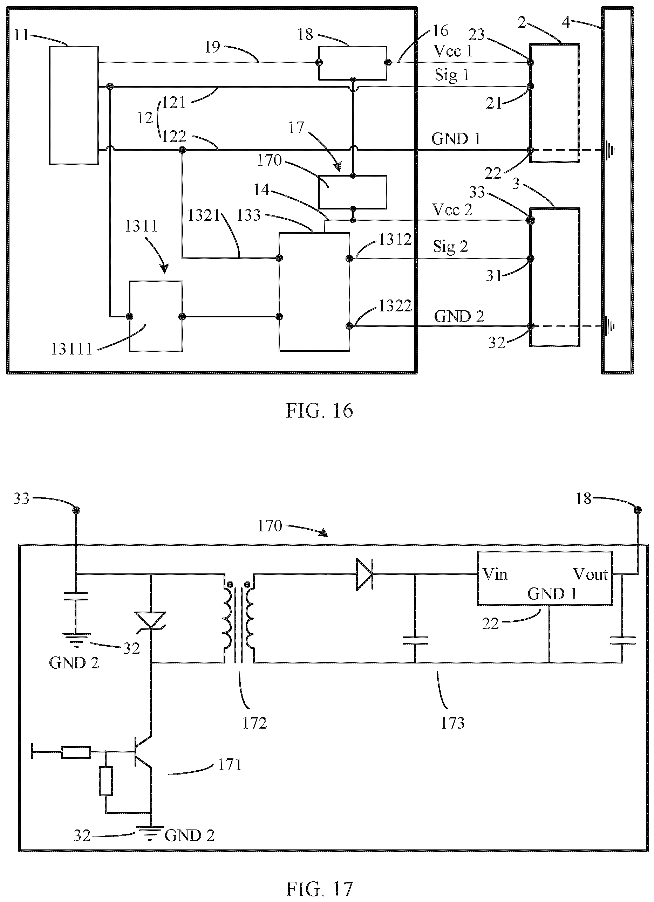

In some other examples, as shown in FIG. 13 and FIG. 16, the accelerator pedal position detection unit 1 further includes a first input circuit 16, a second input circuit 17, a power supply selection circuit 18, and an output circuit 19. One end of the first input circuit 16 is connected to a first power supply end 23 of the first electronic control unit 2, and the other end is connected to the power supply selection circuit 18. One end of the second input circuit 17 is connected to a second power supply end 33 of the second electronic control unit 3, and the other end is connected to the power supply selection circuit 18. One end of the output circuit 19 is connected to the power supply selection circuit 18, and the other end is connected to the position sensor 11. The power supply selection circuit 18 is configured to output, from the output circuit 19, electric energy input through the first input circuit 16 or electric energy input through the second input circuit 17.

The power supply selection circuit 18 is disposed, so that the position sensor 11 can be simultaneously connected to power supplies of the first electronic control unit 2 and the second electronic control unit 3. In this way, when one of the power supplies is faulty, the other power supply can also supply power to the position sensor 11. This ensures reliability of the driving control system.

Selection logic of the power supply selection circuit 18 is not limited in embodiments of the present disclosure. In some examples, the power supply selection circuit 18 is configured to: if the electric energy fails to be input through the first input circuit 16, and the electric energy is normally input through the second input circuit 17, output, from the output circuit 19, the electric energy input through the second input circuit 17. If the electric energy is normally input through the first input circuit 16, the electric energy input through the first input circuit 16 is output from the output circuit 19.

The following describes an example of an implementation of the power supply selection circuit 18.

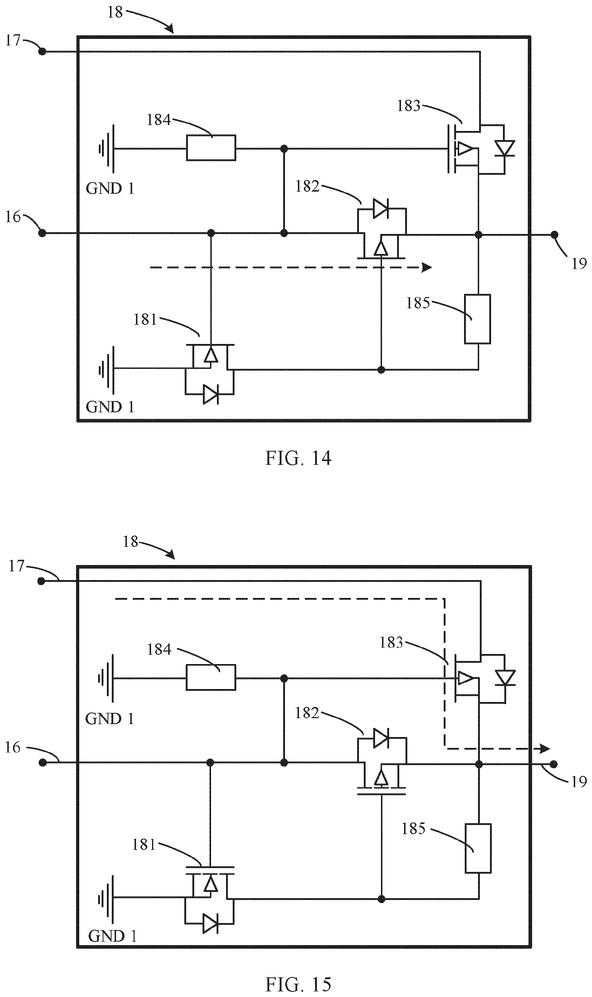

As shown in FIG. 14 and FIG. 15, the power supply selection circuit 18 includes an NMOS transistor 181, a first PMOS transistor 182, a second PMOS transistor 183, a sixth resistor 184, and a seventh resistor 185.

As shown in FIG. 14, when the electric energy is normally input through the first input circuit 16, a gate of the NMOS transistor 181 is at a high potential, and the NMOS transistor 181 is switched on, so that a gate of the first PMOS transistor 182 is grounded, and the first PMOS transistor 182 is also switched on. In this case, there is a closed circuit between the first input circuit 16 and the output circuit 19, and the electric energy input through the first input circuit 16 is output through the output circuit 19.

However, because a gate of the second PMOS transistor 183 is connected to the first input circuit 16, the gate of the second PMOS transistor 183 is at a high potential. In this case, the second PMOS transistor 183 is switched off. In this case, there is an open circuit between the second input circuit 17 and the output circuit 19. In this case, regardless of whether the electric energy is input through the second input circuit 17, the electric energy is not output through the output circuit 19.

As shown in FIG. 15, when the electric energy is abnormally input through the first input circuit 16, the gate of the second PMOS transistor 183 is grounded through the sixth resistor 184, and the gate of the second PMOS transistor 183 is at a low potential. In this case, the second PMOS transistor 183 is switched on. In this case, there is a closed circuit between the second input circuit 17 and the output circuit 19, and the electric energy input through the second input circuit 17 can be output through the output circuit 19.

However, because the electric energy is abnormally input through the first input circuit 16, the gate of the NMOS transistor 181 is at a low potential. In this case, the NMOS transistor 181 is switched off. The gate of the first PMOS transistor 182 is not grounded, but is connected to the output circuit 19 (or referred to as the second input circuit 17) through the seventh resistor 185, and the gate of the first PMOS transistor 182 is at a high potential. In this case, the first PMOS transistor 182 is switched off. In this case, there is an open circuit between the first input circuit 16 and the output circuit 19.

Generally, a voltage of the first power supply end 23 of the first electronic control unit 2 relative to the first ground end 22 is the same as a voltage of the second power supply end 33 of the second electronic control unit 3 relative to the second ground end 32. Therefore, if there is no voltage difference between the first ground end 22 and the second ground end 32, electric energy output by the second power supply end 33 may be directly output to the position sensor 11.

However, if there is a voltage difference between the first ground end 22 and the second ground end 32, and the electric energy output by the second power supply end 33 is directly output to the position sensor 11, a power supply voltage may be excessively high or low. This affects signal collection of the first electronic control unit 2 and the second electronic control unit 3.

To resolve the foregoing technical problem, in some examples, as shown in FIG. 16, the second input circuit 17 includes an isolation circuit 170. An input end of the isolation circuit 170 is connected to the second power supply end 33, and an output end is connected to the power supply selection circuit 18. A voltage of the input end of the isolation circuit 170 relative to the second ground end 32 of the second electronic control unit 3 is equal to a voltage of the output end of the isolation circuit 170 relative to the first ground end 22 of the first electronic control unit 2.

The following provides a possible implementation of the isolation circuit 170.

In some examples, as shown in FIG. 17, the isolation circuit 170 includes a primary side circuit 171, a transformer 172, and a secondary side circuit 173. The primary side circuit 171 is coupled to the secondary side circuit 173 through the transformer 172. The primary side circuit 171 is connected to the second power supply end 33 of the second electronic control unit 3, and is grounded by using the second ground end 32. The secondary side circuit 173 is connected to the power supply selection circuit 18, and is grounded by using the first ground end 22.

The operational amplifier power supply circuit 14 may be connected to the primary side circuit 171. In some examples, a voltage conversion ratio of the transformer 172 is 1:1.

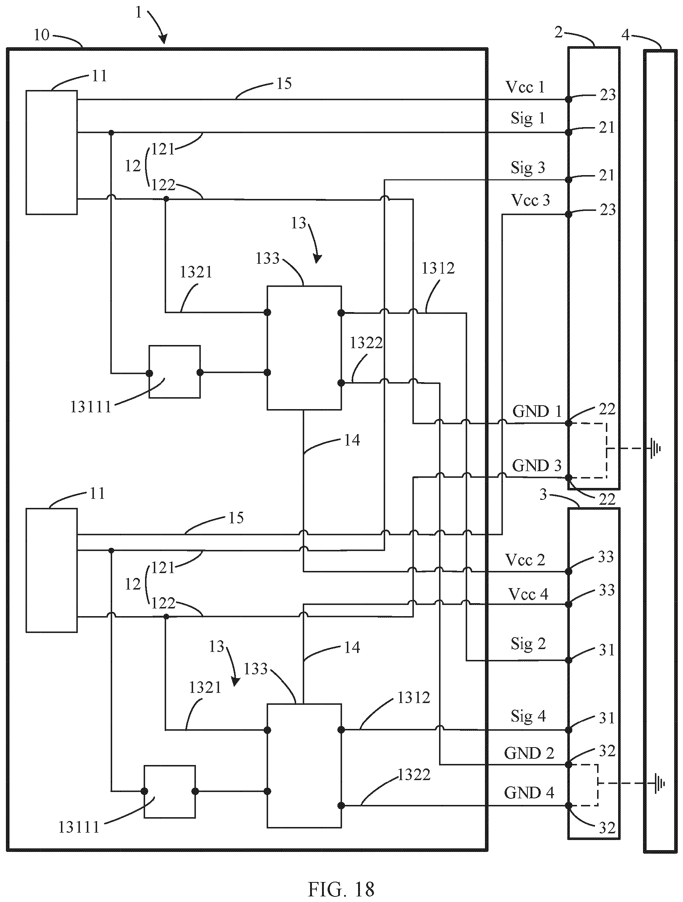

Quantities of position sensors 11, first signal transmission circuits 12, and second signal transmission circuits 13 are not limited in embodiments of the present disclosure. In some examples, as shown in FIG. 18, there are two position sensors 11, two first signal transmission circuits 12, and two second signal transmission circuits 13. The two position sensors 11 are connected to the first electronic control unit 2 through the two first signal transmission circuits 12 respectively, and are connected to the second electronic control unit 3 through the two second signal transmission circuits 13 respectively.

For example, as shown in FIG. 18, the first electronic control unit 2 has two first signal collection ends 21 and two first ground ends 22, and the two first ground ends 22 are grounded through a same position in the vehicle frame. The second electronic control unit 3 has two second signal collection ends 31 and two second ground ends 32, and the two second ground ends 32 are grounded through a same position in the vehicle frame.

The two first signal collection ends 21 of the first electronic control unit 2 are respectively connected to two first position signal circuits 121, and the two first ground ends 22 are respectively connected to two first ground signal circuits 122. The two second signal collection ends 31 of the second electronic control unit 3 are respectively connected to two position signal output circuits 1312, and the two second ground ends 32 are respectively connected to two second ground circuits 1322.

Based on the foregoing disposition, the first electronic control unit 2 or the second electronic control unit 3 can control the power output of the vehicle based on position signals detected by the two position sensors 11. This improves control precision of the power output of the vehicle. In addition, when one of the two position sensors 11 is faulty, the other position sensor 11 can still transmit the position signal to a corresponding electronic control unit. This improves the reliability of the driving control system.

In addition, when there are two position sensors 11, correspondingly, as shown in FIG. 18, there are also two power supply transmission circuits 15. The two power supply transmission circuits 15 are respectively configured to supply power to the two position sensors 11. For example, the first electronic control unit 2 has two first power supply ends 23. The two first power supply ends 23 are respectively connected to the two power supply transmission circuits 15.

In some examples, there are also two operational amplifier power supply circuits 14. The two operational amplifier power supply circuits 14 are respectively configured to supply power to two first operational amplifiers 1331, and the two operational amplifier power supply circuits 14 are respectively connected to two second power supply ends 33 of the second electronic control unit 3.

It should be noted that, if power is supplied to the position sensor 11 through the first input circuit 16, the second input circuit 17, the power supply selection circuit 18, and the output circuit 19, in some examples, there may be two output circuits 19. One ends of the two output circuits 19 are connected to the same power supply selection circuit 18, and the other ends are respectively connected to the two position sensors 11. In this case, the first electronic control unit 2 may have one first power supply end 23, and the second electronic control unit 3 may have one second power supply end 33.

In some other examples, there may alternatively be two first input circuits 16, two second input circuits 17, two power supply selection circuits 18, and two output circuits 19, and the two first input circuits 16, the two second input circuits 17, the two power supply selection circuits 18, and the two output circuits 19 are respectively configured to connect to the two position sensors 11. This can improve reliability of supplying power to the position sensor 11. In this case, the first electronic control unit 2 has two first power supply ends 23, and the second electronic control unit 3 has two second power supply ends 33. In this case, the two first power supply ends 23 are respectively connected to the two first input circuits 16, and the two second power supply ends 33 are respectively connected to the two second input circuits 17.

In some examples, as shown in FIG. 18, the position sensor 11, the first signal transmission circuit 12, and the second signal transmission circuit 13 are integrated on a same circuit board 10.

In terms of product form, the accelerator pedal position detection unit 1, the first electronic control unit 2, and the second electronic control unit 3 are three separate components. Therefore, both a connection between the first signal transmission circuit 12 and the first electronic control unit 2 and a connection between the second signal transmission circuit 13 and the second electronic control unit 3 need to be implemented through a harness.

In some examples, the first signal transmission circuit 12 is connected to the first electronic control unit 2 through a first harness, and the second signal transmission circuit 13 is connected to the second electronic control unit 3 through a second harness.

In this case, when one of the first harness and the second harness is faulty, the other harness can still transmit the position signal to a corresponding electronic control unit. This improves the reliability of the driving control system.

In addition, when there are two position sensors 11, two first signal transmission circuits 12, and two second signal transmission circuits 13, correspondingly, there are also two first harnesses and two second harnesses.

The following describes examples of transmission lines included in the first harness and the second harness.

As shown in FIG. 4, FIG. 10, FIG. 13, and FIG. 16, there is one first harness and one second harness. The first harness includes a power supply line Vcc 1, a position signal line Sig 1, and a ground signal line GND 1. The second harness includes a power supply line Vcc 2, a position signal line Sig 2, and a ground signal line GND 2.

As shown in FIG. 4 and FIG. 10, two ends of the power supply line Vcc 1 are respectively connected to the first power supply end 23 and the power supply transmission circuit 15, and two ends of the power supply line Vcc 2 are respectively connected to the second power supply end 33 and the operational amplifier power supply circuit 14. The power supply line Vcc 2 is configured to supply power to the first operational amplifier 1331.

As shown in FIG. 13 and FIG. 16, two ends of the power supply line Vcc 1 are respectively connected to the first power supply end 23 and the first input circuit 16, two ends of the power supply line Vcc 2 are respectively connected to the second power supply end 33 and the second input circuit 17, and the second input circuit 17 is further connected to the operational amplifier power supply circuit 14. The power supply line Vcc 2 is configured to supply power to the position sensor 11 and the first operational amplifier 1331.

As shown in FIG. 18, there are two first harnesses and two second harnesses. One first harness includes a power supply line Vcc 1, a position signal line Sig 1, and a ground signal line GND 1, and the other first harness includes a power supply line Vcc 3, a position signal line Sig 3, and a ground signal line GND 3. One second harness includes a power supply line Vcc 2, a position signal line Sig 2, and a ground signal line GND 2, and the other second harness includes a power supply line Vcc 4, a position signal line Sig 4, and a ground signal line GND 4.

The following describes examples of the first electronic control unit 2 and the second electronic control unit 3.

The first electronic control unit 2 and the second electronic control unit 3 may be primary and secondary control units for each other. For example, the first electronic control unit 2 is a primary electronic control unit, and the second electronic control unit 3 is a secondary electronic control unit, or is referred to as a redundant electronic control unit.

When the first electronic control unit 2 is normal, regardless of whether the second electronic control unit 3 is faulty, the first electronic control unit 2 may control the power output of the vehicle based on the position signal detected by the position sensor 11. When the first electronic control unit 2 is faulty, the second electronic control unit 3 controls the power output of the vehicle based on the position signal detected by the position sensor 11.

It should be noted that, if the components are normal, both the first electronic control unit 2 and the second electronic control unit 3 can collect the position signal of the position sensor 11, and only if the first electronic control unit 2 is normal, the second electronic control unit 3 does not perform processing based on the position signal of the position sensor 11.

In some examples, the first electronic control unit 2 is connected to the second electronic control unit 3. For example, the first electronic control unit 2 may be connected to the second electronic control unit 3 through a controller area network (controller area network, CAN) bus or an Ethernet (Ethernet, ETH) bus.

The following describes, by using an example in which the first electronic control unit 2 is a primary electronic control unit, and the second electronic control unit 3 is a secondary electronic control unit, a switching process in which the secondary electronic control unit takes over power output control of the vehicle after the primary electronic control unit is faulty.

After the first electronic control unit 2 is faulty, the driver perceives that a vehicle speed does not change correspondingly with the accelerator pedal being pressed. In addition, a dashboard, a central control screen, or the like of the vehicle displays prompt information indicating that the first electronic control unit 2 is faulty. Therefore, in consideration of safety, the driver slows down and stalls the vehicle.

In addition, the second electronic control unit 3 determines that the first electronic control unit 2 is faulty. For example, after the first electronic control unit 2 is faulty, a fault indication message may be sent to the second electronic control unit 3. For another example, if the first electronic control unit 2 cannot send the fault indication message, the second electronic control unit 3 determines that the second electronic control unit 3 cannot receive a packet sent by the first electronic control unit 2, and can also determine that the first electronic control unit 2 is faulty.

When the vehicle is started again after stalling, because the second electronic control unit 3 has determined that the first electronic control unit 2 is faulty, the second electronic control unit 3 may take over control processing performed on the power output of the vehicle based on the position signal. When the driver presses the accelerator pedal again, the vehicle speed can change correspondingly.

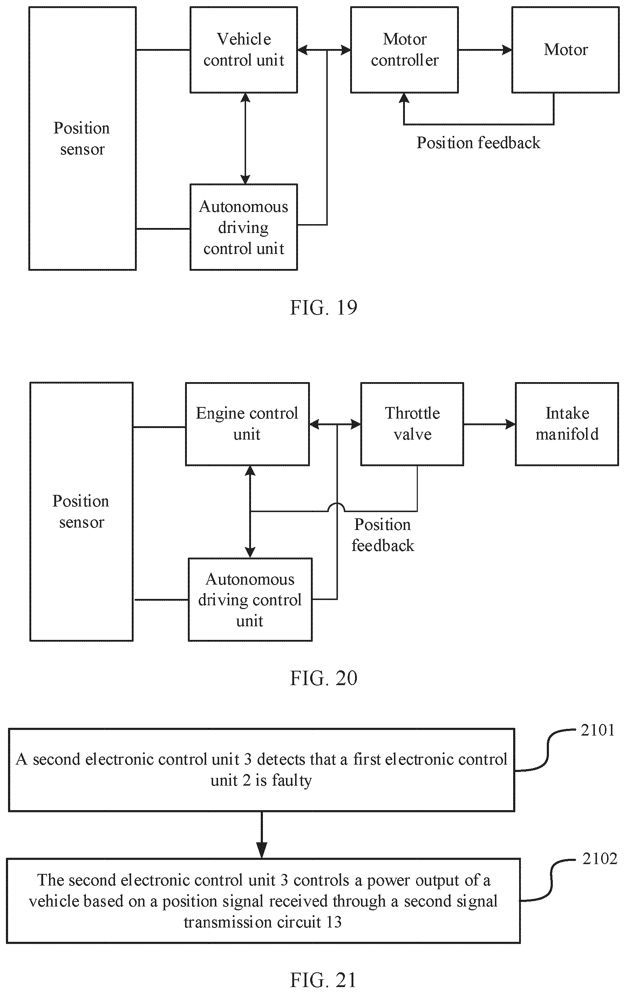

Specific components indicated by the first electronic control unit 2 and the second electronic control unit 3 in the vehicle are not limited in embodiments of the present disclosure. In some examples, as shown in FIG. 19, the vehicle is an electric vehicle. In this case, one of the first electronic control unit 2 and the second electronic control unit 3 is a vehicle control unit, and the other is an autonomous driving control unit. For example, the first electronic control unit 2 is a vehicle control unit, and the second electronic control unit 3 is an autonomous driving control unit.

In some other examples, as shown in FIG. 20, the vehicle is a fuel vehicle. In this case, one of the first electronic control unit 2 and the second electronic control unit 3 is an engine control unit, and the other is an autonomous driving control unit. For example, the first electronic control unit 2 is an engine control unit, and the second electronic control unit 3 is an autonomous driving control unit.

The vehicle control unit or the engine control unit is a controller configured to control a vehicle based on a position signal of an accelerator pedal in a manual driving mode. The autonomous driving control unit is a controller configured to automatically control a vehicle in an autonomous driving mode. The autonomous driving control unit may also be referred to as an assisted driving controller or an autonomous driving full-stack solution (autonomous driving solution, ADS) controller.

The vehicle control unit (or the engine control unit) and the autonomous driving control unit of the vehicle are selected as the first electronic control unit 2 and the second electronic control unit 3, so that no new electronic control unit needs to be added to the vehicle. This reduces implementation costs and facilitates implementation of the technical solution.

The following describes examples of control logic of the vehicle control unit (or the engine control unit) and control logic of the autonomous driving control unit.

In the manual driving mode, when the vehicle control unit or the engine control unit is in a normal state, the vehicle control unit or the engine control unit receives the position signal of the accelerator pedal sent by the accelerator pedal position detection unit 1, and controls the power output of the vehicle based on the position signal of the accelerator pedal.

When the vehicle control unit or the engine control unit is faulty, the autonomous driving control unit receives the position signal of the accelerator pedal sent by the accelerator pedal position detection unit 1, and controls the power output of the vehicle based on the position signal of the accelerator pedal.

In addition, when the vehicle is in the autonomous driving mode, the autonomous driving control unit automatically controls the vehicle.

An embodiment of the present disclosure further provides an accelerator pedal position detection unit 1. As shown in FIG. 3 and FIG. 4, the accelerator pedal position detection unit 1 includes a position sensor 11, a first signal transmission circuit 12, and a second signal transmission circuit 13. The position sensor 11 is connected to the first signal transmission circuit 12 and the second signal transmission circuit 13. The first signal transmission circuit 12 is configured to connect to a first electronic control unit 2. The second signal transmission circuit 13 is configured to connect to a second electronic control unit 3.

In some examples, as shown in FIG. 3 and FIG. 4, the first signal transmission circuit 12 includes a first position signal circuit 121 and a first ground signal circuit 122. One end of the first position signal circuit 121 is connected to the position sensor 11, and the other end is configured to connect to a first signal collection end 21 of the first electronic control unit 2. One end of the first ground signal circuit 122 is connected to the position sensor 11, and the other end is connected to a first ground end 22 of the first electronic control unit 2.

In some examples, as shown in FIG. 4, the second signal transmission circuit 13 includes a second position signal circuit 131, a second ground signal circuit 132, and a differential operation circuit 133. The second position signal circuit includes a position signal input circuit 1311 and a position signal output circuit 1312. The second ground signal circuit 132 includes a first ground circuit 1321 and a second ground circuit 1322. One end of the position signal input circuit 1311 is connected to the position sensor 11, and the other end is connected to the differential operation circuit 133. One end of the first ground circuit 1321 is connected to the position sensor 11, and the other end is connected to the differential operation circuit 133. One end of the position signal output circuit 1312 is connected to the differential operation circuit 133, and the other end is connected to a second signal collection end 31 of the second electronic control unit 3. One end of the second ground circuit 1322 is connected to the differential operation circuit 133, and the other end is connected to a second ground end 32 of the second electronic control unit 3. The differential operation circuit 133 is configured to adjust a voltage V1, relative to the first ground circuit 1321, of a position signal input through the position signal input circuit 1311, so that a voltage V2, relative to the second ground circuit 1322, of a position signal output through the position signal output circuit 1312 is in a linear relationship with V1.

In some examples, $V2 = k \times V1 + V0$, where V0 is a target non-negative voltage, and k is a constant greater than 0.

In some examples, $k \times V1max + V0 \leq V1max$, where V1max is a maximum value of V1.

In some examples, as shown in FIG. 5 to FIG. 9, the differential operation circuit 133 includes a first operational amplifier 1331, a first resistor 1332, a second resistor 1333, a third resistor 1334, and a fourth resistor 1335. The first operational amplifier 1331 has a first positive input end 1331a, a first negative input end 1331b, and a first operation output end 1331c. The position signal input circuit 1311 is connected to the first positive input end 1331a through the first resistor 1332. The first ground circuit 1321 is connected to the first negative input end 1331b through the fourth resistor 1335. The position signal output circuit 1312 is connected to the first operation output end 1331c, and the first operation output end 1331c is connected to the first negative input end 1331b through the third resistor 1334. The second ground circuit 1322 is connected to the first positive input end 1331a through the second resistor 1333.

In some examples, as shown in FIG. 7 to FIG. 9, the differential operation circuit 133 further includes a voltage step-up unit 1336 and a fifth resistor 1337. The voltage step-up unit 1336 is connected to the first positive input end 1331a through the fifth resistor 1337. The voltage step-up unit 1336 is configured to enable a voltage input by the first positive input end 1331a to be greater than or equal to 0.

In some examples, as shown in FIG. 9, the voltage step-up unit 1316 is a power supply output by the second electronic control unit 3.

In some examples, as shown in FIG. 10, the position signal input circuit 1311 includes a voltage follower 13111. An input end of the voltage follower 13111 is connected to the position sensor 11, and an output end is connected to the differential operation circuit 133.

In some examples, as shown in FIG. 10, the accelerator pedal position detection unit 1 further includes a power supply transmission circuit 15. One end of the power supply transmission circuit 15 is configured to connect to a first power supply end 23 of the first electronic control unit 2, and the other end is connected to the position sensor 11.

In some examples, as shown in FIG. 13, the accelerator pedal position detection unit 1 further includes a first input circuit 16, a second input circuit 17, a power supply selection circuit 18, and an output circuit 19. One end of the first input circuit 16 is configured to connect to a first power supply end 23 of the first electronic control unit 2, and the other end is connected to the power supply selection circuit 18. One end of the second input circuit 17 is configured to connect to a second power supply end 33 of the second electronic control unit 3, and the other end is connected to the power supply selection circuit 18. One end of the output circuit 19 is connected to the power supply selection circuit 18, and the other end is connected to the position sensor 11. The power supply selection circuit 18 is configured to output, from the output circuit 19, electric energy input through the first input circuit 16 or electric energy input through the second input circuit 17.

In some examples, the power supply selection circuit 18 is configured to: if the electric energy is normally input through the first input circuit 16, output, from the output circuit 19, the electric energy input through the first input circuit 16.

In some examples, the power supply selection circuit 18 is configured to: if the electric energy fails to be input through the first input circuit 16, and the electric energy is normally input through the second input circuit 17, output, from the output circuit 19, the electric energy input through the second input circuit 17.

In some examples, a voltage of an input end of the second input circuit 17 relative to the second ground end 32 of the second electronic control unit 3 is equal to a voltage of an output end of the second input circuit 17 relative to the first ground end 22 of the first electronic control unit 2.

In some examples, as shown in FIG. 16, the second input circuit 17 includes an isolation circuit 170. An input end of the isolation circuit 170 is connected to the second power supply end 33, and an output end is connected to the power supply selection circuit 18. A voltage of the input end of the isolation circuit 170 relative to the second ground end 32 of the second electronic control unit 3 is equal to a voltage of the output end of the isolation circuit 170 relative to the first ground end 22 of the first electronic control unit 2.

In some examples, as shown in FIG. 17, the isolation circuit 170 includes a primary side circuit 171, a transformer 172, and a secondary side circuit 173. The primary side circuit 171 is coupled to the secondary side circuit 173 through the transformer 172. The primary side circuit 171 is connected to the second power supply end 33 of the second electronic control unit 3, and is grounded by using the second ground end 32. The secondary side circuit 173 is connected to the power supply selection circuit 18, and is grounded by using the first ground end 22.

In some examples, as shown in FIG. 18, there are two position sensors 11, two first signal transmission circuits 12, and two second signal transmission circuits 13. The two position sensors 11 are respectively connected to the two first signal transmission circuits 12, and are respectively connected to the two second signal transmission circuits 13. The two first signal transmission circuits 12 are both configured to connect to the first electronic control unit 2, and the two second signal transmission circuits 13 are both configured to connect to the second electronic control unit 3.

In some examples, as shown in FIG. 18, the position sensor 11, the first signal transmission circuit 12, and the second signal transmission circuit 13 are integrated on a same circuit board 10.

In some examples, the first signal transmission circuit 12 is configured to connect to the first electronic control unit 2 through a first harness, and the second signal transmission circuit 13 is configured to connect to the second electronic control unit 3 through a second harness.

In some examples, as shown in FIG. 19, one of the first electronic control unit 2 and the second electronic control unit 3 is a vehicle control unit, and the other is an autonomous driving control unit; or as shown in FIG. 20, one of the first electronic control unit 2 and the second electronic control unit 3 is an engine control unit, and the other is an autonomous driving control unit. The autonomous driving control unit is configured to: when the vehicle control unit or the engine control unit is faulty, control a power output of a vehicle based on a position signal of an accelerator pedal detected by the position sensor 11.

It should be noted that the accelerator pedal position detection unit 1 provided in the foregoing embodiment and the driving control system provided in the foregoing embodiment pertain to a same concept. For a specific implementation process of the accelerator pedal position detection unit 1, refer to the embodiment of the driving control system. Details are not described herein again.

An embodiment of the present disclosure further provides an accelerator pedal. The accelerator pedal includes an accelerator pedal mechanical part and the accelerator pedal position detection unit 1.

The accelerator pedal mechanical part is configured for a driver to press. The accelerator pedal position detection unit 1 is configured to detect a position signal of the accelerator pedal mechanical part, and transmit the position signal to a first electronic control unit 2 and a second electronic control unit 3.

An embodiment of the present disclosure further provides a vehicle. The vehicle includes the foregoing driving control system.

A specific type of the vehicle is not limited in embodiments of the present disclosure. The vehicle may be a fuel vehicle or an electric vehicle.

In some examples, as shown in FIG. 19, the vehicle is an electric vehicle. In this case, a first electronic control unit 2 may be an engine control unit in the vehicle, and a second electronic control unit 3 may be an autonomous driving control unit in the vehicle.

In some examples, as shown in FIG. 20, the vehicle is a fuel vehicle. In this case, a first electronic control unit 2 may be a vehicle control unit in the vehicle, and a second electronic control unit 3 may be an autonomous driving control unit in the vehicle.

An embodiment of the present disclosure further provides a driving control method. The driving control method is applied to the foregoing driving control system. As shown in FIG. 21, the method includes the following steps.

In step 2101, a second electronic control unit 3 detects that a first electronic control unit 2 is faulty.

When the first electronic control unit 2 is normal, the first electronic control unit 2 may control a power output of a vehicle based on a position signal received through a first signal transmission circuit 12.

In step 2102, the second electronic control unit 3 controls the power output of the vehicle based on the position signal received through a second signal transmission circuit 13.

In the technical solution provided in this embodiment of the present disclosure, based on the foregoing disposition, when the first electronic control unit 2 is faulty, the second electronic control unit 3 can also control the power output of the vehicle based on the position signal of an accelerator pedal. This improves reliability of the vehicle.

In some examples, after the second electronic control unit 3 detects that the first electronic control unit 2 is faulty, when the second electronic control unit 3 detects that the vehicle is restarted after being turned off, the second electronic control unit 3 controls the power output of the vehicle based on the position signal received through the second signal transmission circuit 13.

Turning off the vehicle includes stalling a fuel vehicle and turning off a motor of an electric vehicle, and restarting the vehicle includes reigniting the fuel vehicle and restarting the motor of the electric vehicle.

In the technical solution provided in this embodiment of the present disclosure, when the first electronic control unit 2 is faulty, and the vehicle is restarted after being turned off, the second electronic control unit 3 takes over power output control of the vehicle. This can improve driving safety of the vehicle, and avoid a case in which when a driver rapidly presses the accelerator pedal due to a failure of pressing the accelerator pedal, the second electronic control unit 3 suddenly takes over power output control of the vehicle, resulting in an instantaneous increase in a vehicle speed.

It should be noted that, after the first electronic control unit 2 is normal, the first electronic control unit 2 may take over power output control of the vehicle again. Correspondingly, when the first electronic control unit 2 detects that the vehicle is restarted after being turned off, the first electronic control unit 2 controls the power output of the vehicle based on the position signal received through the first signal transmission circuit 12.

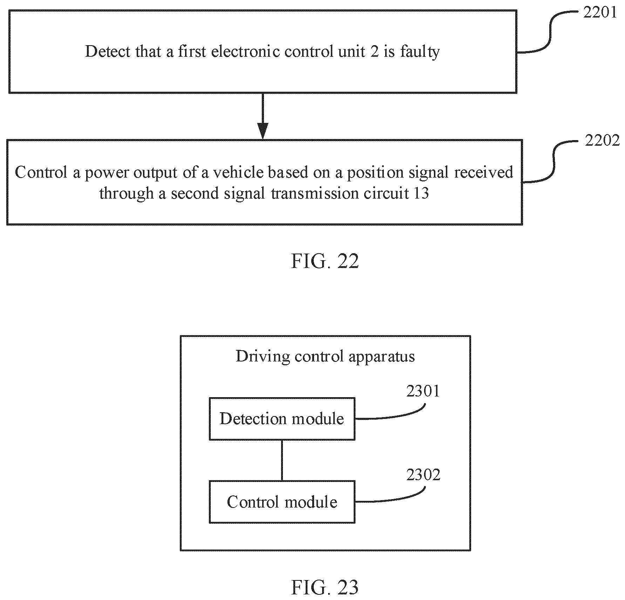

An embodiment of the present disclosure further provides a driving control method. The driving control method is applied to a second electronic control unit 3 of a driving control system. As shown in FIG. 22, the driving control method includes the following steps.

In step 2201, it is detected that a first electronic control unit 2 is faulty.

When the first electronic control unit 2 is normal, the first electronic control unit 2 may control a power output of a vehicle based on a position signal received through a first signal transmission circuit 12.

In step 2202, the power output of the vehicle is controlled based on the position signal received through a second signal transmission circuit 13.

In the technical solution provided in this embodiment of the present disclosure, based on the foregoing disposition, when the first electronic control unit 2 is faulty, the second electronic control unit 3 can also control the power output of the vehicle based on the position signal of an accelerator pedal. This improves reliability of the vehicle.

In some examples, after it is detected that the first electronic control unit 2 is faulty, when it is detected that the vehicle is restarted after being turned off, the power output of the vehicle is controlled based on the position signal received through the second signal transmission circuit 13.

In the technical solution provided in the present disclosure, after the first electronic control unit 2 is faulty, when the vehicle is restarted after being turned off, the second electronic control unit 3 takes over power output control of the vehicle. This can improve driving safety of the vehicle, and avoid a case in which when a driver rapidly presses the accelerator pedal due to a failure of pressing the accelerator pedal, the second electronic control unit 3 suddenly takes over power output control of the vehicle, resulting in instantaneous acceleration of the vehicle.

An embodiment of the present disclosure further provides a driving control apparatus. The driving control apparatus is configured in the second electronic control unit 3 of the driving control system. As shown in FIG. 23, the driving control apparatus includes:

a detection module 2301, configured to detect that a first electronic control unit 2 is faulty; and
a control module 2302, configured to control a power output of a vehicle based on a position signal received through a second signal transmission circuit 13.

In some examples, before the control module 2302 controls the power output of the vehicle based on the position signal received through the second signal transmission circuit 13, the detection module 2301 is further configured to restart the vehicle after detecting that the vehicle is turned off.

An embodiment of the present disclosure further provides an electronic control unit. The electronic control unit includes a controller. The controller is coupled to a memory. The memory stores at least one instruction. The at least one instruction is loaded and executed by the controller, to implement the foregoing driving control method.

The electronic control unit may be a first electronic control unit 2 or a second electronic control unit 3.

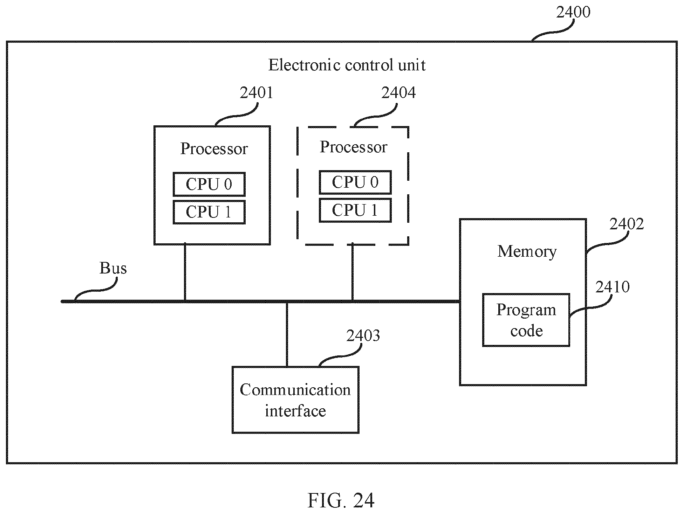

FIG. 24 is a diagram of a structure of an electronic control unit 2400 according to an embodiment of the present disclosure. The electronic control unit 2400 shown in FIG. 24 may be the first electronic control unit 2 or the second electronic control unit 3.

As shown in FIG. 24, the electronic control unit 2400 includes at least one processor 2401 (or referred to as a controller), a memory 2402, and at least one communication interface 2403.

The processor 2401 is, for example, a general-purpose central controller (central processing unit, CPU), a digital signal controller (digital signal processor, DSP), a network processor (network processor, NP), a graphics controller (graphics processing unit, GPU), a neural-network controller (neural-network processing unit, NPU), a data processing unit (data processing unit, DPU), a microcontroller unit, or one or more integrated circuits configured to implement the solutions in embodiments of the present disclosure. For example, the processor 2401 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor 2401 may implement or execute various logical blocks, modules, and circuits described with reference to the content disclosed in embodiments of the present invention. Alternatively, the processor 2401 may be a combination of processors implementing a computing function, for example, a combination including one or more microcontroller units, or a combination of a DSP and a microcontroller unit.

In some examples, the electronic control unit 2400 further includes a bus. The bus is configured to transmit information between the components of the electronic control unit 2400. The bus may be a peripheral component interconnect (peripheral component interconnect, PCI for short) bus, a PCIe bus, an extended industry standard architecture (extended industry standard architecture, EISA for short) bus, or the like. Buses may be classified into an address bus, a data bus, a control bus, and the like. For ease of representation, only one thick line is used to represent the bus in FIG. 24, but this does not mean that there is only one bus or only one type of bus.

The memory 2402 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer, but is not limited thereto. For example, the memory 2402 exists independently, and is connected to the processor 2401 through the bus. Alternatively, the memory 2402 may be integrated with the processor 2401.

The communication interface 2403 is any apparatus, for example, a transceiver, and is configured to communicate with another device or a communication network. The communication network may be the Ethernet, a radio access network (RAN), a wireless local area network (wireless local area network, WLAN), or the like. The communication interface 2403 may include a wired communication interface, and may further include a wireless communication interface.

Specifically, the communication interface 2403 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a WLAN interface, a cellular network communication interface, or a combination thereof. The Ethernet interface may be an optical interface, an electrical interface, or a combination thereof. In this embodiment of the present disclosure, the communication interface 2403 may be configured for the electronic control unit 2400 to communicate with another device.

In some examples, the processor 2401 may include one or more CPUs, for example, a CPU 0 and a CPU 1 shown in FIG. 24. Each of the processors may be a single-core (single-CPU) processor or a multi-core (multi-CPU) processor. The processor herein may be one or more devices, circuits, and/or processing cores configured to process data (for example, computer program instructions).

In some examples, the electronic control unit 2400 may include a plurality of processors, for example, a processor 2401 and a processor 2404 shown in FIG. 24. Each of the processors may be a single-core controller or a multi-core controller. The processor herein may be one or more devices, circuits, and/or processing cores configured to process data (for example, computer program instructions).

In some examples, the electronic control unit 2400 may further include an output device and an input device. The output device communicates with the processor 2401, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 2401, and may receive an input from a user in a plurality of manners. For example, the input device may be a mouse, a keyboard, a touchscreen device, a sensing device, or the like.

In some examples, the memory 2402 is configured to store program code 2410 for performing the solutions in embodiments of the present disclosure, and the processor 2401 may execute the program code 2410 stored in the memory 2402. The program code 2410 may include one or more software modules. Optionally, the processor 2401 may also store program code or instructions for performing the solutions in embodiments of the present disclosure.

Steps performed in the driving control method shown in FIG. 22 are completed through an integrated logic circuit or instructions in a form of software in the processor 2401. The steps of the method disclosed with reference to embodiments of the present disclosure may be directly performed and completed by a hardware controller, or may be performed and completed by using a combination of hardware and a software module in the controller. The software module may be located in a mature storage medium in the art, for example, a random access memory, a flash memory, a read-only memory, a programmable read-only memory, an electrically erasable programmable memory, or a register. The storage medium is located in the memory. The controller reads information in the memory, and completes the steps of the foregoing method in combination with hardware of the controller. To avoid repetition, details are not described herein again.

An embodiment of the present disclosure further provides another electronic control unit. The electronic control unit may be the first electronic control unit 2 or the second electronic control unit 3. The electronic control unit includes a transceiver, a memory, and a controller. The transceiver, the memory, and the controller communicate with each other through an internal connection path. The memory is configured to store instructions. The controller is configured to execute the instructions stored in the memory, to control the transceiver to receive a signal and control the transceiver to send a signal. In addition, when the controller executes the instructions stored in the memory, the controller is enabled to perform the driving control method.

It should be understood that the controller may be a central controller, or may be another general-purpose controller, a digital signal controller, an ASIC, an FPGA or another programmable logic device, a discrete gate or transistor logic device, a discrete hardware component, or the like. The general-purpose controller may be a microcontroller unit, any conventional controller, or the like. It should be noted that the controller may be a controller that supports an advanced reduced instruction set computing machine (advanced RISC machine, ARM) architecture.

Further, in some examples, the memory may include a read-only memory and a random access memory, and provide instructions and data for the controller. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitative descriptions, many forms of RAMs are available. For example, the random access memory includes a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of the present disclosure further provides a computer-readable storage medium. The computer-readable storage medium stores at least one instruction. The instruction is loaded and executed by a controller, so that an electronic control unit is enabled to implement the driving control method.

An embodiment of the present disclosure further provides a computer program product. When the computer program product is executed by an electronic control unit, the electronic control unit may be enabled to perform corresponding steps and/or procedures in the foregoing method embodiments.

An embodiment of the present disclosure further provides a chip. The chip includes a controller. The controller is configured to invoke, from a memory, and run instructions stored in the memory, to enable an electronic control unit in which the chip is installed to perform the driving control method.

An embodiment of the present disclosure further provides another chip, including an input interface, an output interface, a controller, and a memory. The input interface, the output interface, the controller, and the memory are connected through an internal connection path. The controller is configured to execute code in the memory. When the code is executed, the controller is configured to perform the driving control method.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on a computer (an electronic control unit), all or some of the procedures or functions according to embodiments of the present disclosure are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive)), or the like.

To clearly describe the interchangeability of hardware and software, the steps and composition of embodiments have been generally described in the foregoing descriptions based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present disclosure.

Computer program code for implementing the methods in embodiments of the present disclosure may be written in one or more programming languages. The computer program code may be provided for a controller of a general-purpose computer, a dedicated computer, or another programmable distance measurement apparatus, so that when the program code is executed by the computer or the another programmable distance measurement apparatus, functions/operations specified in the flowcharts and/or block diagrams are implemented. The program code may be executed entirely on a computer, executed partially on a computer, executed as an independent software package, executed partially on a computer and partially on a remote computer, or executed entirely on a remote computer or a server.

In the context of embodiments of the present disclosure, computer program code or related data may be carried in any appropriate carrier, so that the device, the apparatus, or the controller can perform various processing and operations described above. For example, the carrier includes a signal, a computer-readable medium, or the like. For example, the signal may include an electrical signal, an optical signal, a radio signal, a voice signal, or other forms of propagated signals, such as a carrier wave and an infrared signal.

It may be clearly understood by a person skilled in the art that, for the purpose of convenient and brief description, for detailed working processes of the foregoing system, apparatus, and module, refer to a corresponding process in the foregoing method embodiments. Details are not described herein again.

In several embodiments provided in the present disclosure, it should be understood that the disclosed system, apparatus, and method may be implemented in other manners. For example, the described apparatus embodiment is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, that is, may be located at one position, or may be distributed on a plurality of network modules. Some or all of the modules may be selected based on an actual need to achieve the objectives of the solutions in embodiments of the present disclosure.

In addition, functional modules in embodiments of the present disclosure may be integrated into one processing module, or each of the modules may exist alone physically, or two or more modules may be integrated into one module. The integrated module may be implemented in a form of hardware, or may be implemented in a form of a software functional module.

The terms such as "first" and "second" in the present disclosure are used to distinguish between same or similar items that have basically same effects and functions. It should be understood that there is no logical or time sequence dependency between "first", "second", and "nth". A quantity and an execution sequence are not limited. It should also be understood that although terms such as "first" and "second" are used in the following descriptions to describe various elements, these elements should not be limited by the terms. These terms are simply used to distinguish one element from another.

It should be further understood that, in embodiments of the present disclosure, sequence numbers of the processes do not mean execution sequences. The execution sequences of the processes should be determined based on functions and internal logic of the processes, and should not be construed as any limitation on implementation processes of embodiments of the present disclosure.

A term "at least one" in the present disclosure means one or more, and a term "a plurality of" in the present disclosure means two or more.

It should be understood that the terms used in the descriptions of the various examples in this specification are merely intended to describe specific examples and are not intended to constitute any limitation. The terms "one" ("a" and "an") and "the" of singular forms used in the descriptions of the various examples and the appended claims are also intended to include plural forms, unless otherwise specified in the context clearly.

It should be further understood that, when being used in this specification, the term "include" (or referred to as "includes", "including", "comprises", and/or "comprising") specifies the presence of stated features, integers, steps, operations, elements, and/or components, but does not preclude the presence or addition of one or more other features, integers, steps, operations, elements, components, and/or groups thereof.

It should also be understood that, depending on the context, the phrase "if it is determined..." or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based on only A, and B may alternatively be determined based on A and/or other information.

It should be further understood that "one embodiment", "an embodiment", "some examples", or "a possible implementation" mentioned throughout this specification mean that particular features, structures, or characteristics related to embodiments or implementations are included in at least one embodiment of the present disclosure. Therefore, "in one embodiment", "in an embodiment", "in some examples", or "in a possible implementation" appearing throughout this specification does not necessarily mean a same embodiment. In addition, these particular features, structures, or characteristics may be combined in one or more embodiments in any appropriate manner.

The foregoing descriptions are merely optional embodiments of the present disclosure, but are not intended to limit the present disclosure. Any modification, equivalent replacement, improvement, or the like made without departing from the principle of the present disclosure should fall within the protection scope of the present disclosure.

## Claims

1. A driving control system, wherein the driving control system comprises an accelerator pedal position detection unit (1), a first electronic control unit (2), and a second electronic control unit (3);

   the accelerator pedal position detection unit (1) comprises a position sensor (11), a first signal transmission circuit (12), and a second signal transmission circuit (13);
   the position sensor (11) is connected to the first electronic control unit (2) through the first signal transmission circuit (12); and
   the position sensor (11) is connected to the second electronic control unit (3) through the second signal transmission circuit (13).

2. The driving control system according to claim 1, wherein the first signal transmission circuit (12) comprises a first position signal circuit (121) and a first ground signal circuit (122);

   one end of the first position signal circuit (121) is connected to the position sensor (11), and the other end is connected to a first signal collection end (21) of the first electronic control unit (2); and

one end of the first ground signal circuit (122) is connected to the position sensor (11), and the other end is connected to a first ground end (22) of the first electronic control unit (2).

3. The driving control system according to claim 1 or 2, wherein the second signal transmission circuit (13) comprises a second position signal circuit (131), a second ground signal circuit (132), and a differential operation circuit (133), wherein the second position signal circuit comprises a position signal input circuit (1311) and a position signal output circuit (1312), and the second ground signal circuit (132) comprises a first ground circuit (1321) and a second ground circuit (1322);

one end of the position signal input circuit (1311) is connected to the position sensor (11), and the other end is connected to the differential operation circuit (133);
one end of the first ground circuit (1321) is connected to the position sensor (11), and the other end is connected to the differential operation circuit (133);
one end of the position signal output circuit (1312) is connected to the differential operation circuit (133), and the other end is connected to a second signal collection end (31) of the second electronic control unit (3);
one end of the second ground circuit (1322) is connected to the differential operation circuit (133), and the other end is connected to a second ground end (32) of the second electronic control unit (3); and
the differential operation circuit (133) is configured to:
adjust a voltage V1, relative to the first ground circuit (1321), of a position signal input through the position signal input circuit (1311), so that a voltage V2, relative to the second ground circuit (1322), of a position signal output through the position signal output circuit (1312) is in a linear relationship with V1.

4. The driving control system according to claim 3, wherein $V2 = k \times V1 + V0$, wherein V0 is a target non-negative voltage, and k is a constant greater than 0.

5. The driving control system according to claim 4, wherein $k \times V1max + V0 \leq V1max$, wherein V1max is a maximum value of V1.

6. The driving control system according to any one of claims 3 to 5, wherein the differential operation circuit (133) comprises a first operational amplifier (1331), a first resistor (1332), a second resistor (1333), a third resistor (1334), and a fourth resistor (1335);

the first operational amplifier (1331) has a first positive input end (1331a), a first negative input end (1331b), and a first operation output end (1331c);
the position signal input circuit (1311) is connected to the first positive input end (1331a) through the first resistor (1332);
the first ground circuit (1321) is connected to the first negative input end (1331b) through the fourth resistor (1335);
the position signal output circuit (1312) is connected to the first operation output end (1331c), and the first operation output end (1331c) is connected to the first negative input end (1331b) through the third resistor (1334); and
the second ground circuit (1322) is connected to the first positive input end (1331a) through the second resistor (1333).

7. The driving control system according to claim 6, wherein the differential operation circuit (133) further comprises a voltage step-up unit (1336) and a fifth resistor (1337); and
the voltage step-up unit (1336) is connected to the first positive input end (1331a) through the fifth resistor (1337), and the voltage step-up unit (1336) is configured to enable a voltage input by the first positive input end (1331a) to be greater than or equal to 0.

8. The driving control system according to claim 7, wherein the voltage step-up unit (1336) is a power supply output by the second electronic control unit (3).

9. The driving control system according to any one of claims 3 to 8, wherein the position signal input circuit (1311) comprises a voltage follower (13111); and
an input end of the voltage follower (13111) is connected to the position sensor (11), and an output end of the voltage follower (13111) is connected to the differential operation circuit (133).

10. The driving control system according to any one of claims 1 to 9, wherein the accelerator pedal position detection unit (1) further comprises a power supply transmission circuit (15); and
one end of the power supply transmission circuit (15) is connected to a first power supply end (23) of the first electronic control unit (2), and the other end is connected to the position sensor (11).

11. The driving control system according to any one of claims 1 to 9, wherein the accelerator pedal position detection unit (1) further comprises a first input circuit (16), a second input circuit (17), a power supply selection circuit (18), and an output circuit (19);

> one end of the first input circuit (16) is connected to a first power supply end (23) of the first electronic control unit (2), and the other end is connected to the power supply selection circuit (18);
> one end of the second input circuit (17) is connected to a second power supply end (33) of the second electronic control unit (3), and the other end is connected to the power supply selection circuit (18);
> one end of the output circuit (19) is connected to the power supply selection circuit (18), and the other end is connected to the position sensor (11); and
> the power supply selection circuit (18) is configured to output, from the output circuit (19), electric energy input through the first input circuit (16) or electric energy input through the second input circuit (17).

12. The driving control system according to claim 11, wherein the power supply selection circuit (18) is configured to:
if the electric energy fails to be input through the first input circuit (16), and the electric energy is normally input through the second input circuit (17), output, from the output circuit (19), the electric energy input through the second input circuit (17).

13. The driving control system according to claim 11 or 12, wherein the second input circuit (17) comprises an isolation circuit (170), wherein an input end of the isolation circuit (170) is connected to the second power supply end (33), and an output end is connected to the power supply selection circuit (18); and
a voltage of the input end of the isolation circuit (170) relative to the second ground end (32) of the second electronic control unit (3) is equal to a voltage of the output end of the isolation circuit (170) relative to the first ground end (22) of the first electronic control unit (2).

14. The driving control system according to claim 13, wherein the isolation circuit (170) comprises a primary side circuit (171), a transformer (172), and a secondary side circuit (173);

> the primary side circuit (171) is coupled to the secondary side circuit (173) through the transformer (172);
> the primary side circuit (171) is connected to the second power supply end (33) of the second electronic control unit (3), and is grounded by using the second ground end (32); and
> the secondary side circuit (173) is connected to the power supply selection circuit (18), and is grounded by using the first ground end (22).

15. The driving control system according to any one of claims 1 to 14, wherein there are two position sensors (11), two first signal transmission circuits (12), and two second signal transmission circuits (13);

> the two position sensors (11) are connected to the first electronic control unit (2) through the two first signal transmission circuits (12) respectively; and
> the two position sensors (11) are connected to the second electronic control unit (3) through the two second signal transmission circuits (13) respectively.

16. The driving control system according to any one of claims 1 to 15, wherein the position sensor (11), the first signal transmission circuit (12), and the second signal transmission circuit (13) are integrated on a same circuit board (10).

17. The driving control system according to any one of claims 1 to 16, wherein the first signal transmission circuit (12) is connected to the first electronic control unit (2) through a first harness; and
the second signal transmission circuit (13) is connected to the second electronic control unit (3) through a second harness.

18. The driving control system according to any one of claims 1 to 17, wherein one of the first electronic control unit (2) and the second electronic control unit (3) is a vehicle control unit, and the other is an autonomous driving control unit; or

> one of the first electronic control unit (2) and the second electronic control unit (3) is an engine control unit, and the other is an autonomous driving control unit; and

the autonomous driving control unit is configured to: when the vehicle control unit or the engine control unit is faulty, control a power output of a vehicle based on a position signal of an accelerator pedal detected by the position sensor (11).

19. An accelerator pedal position detection unit, wherein the accelerator pedal position detection unit (1) comprises a position sensor (11), a first signal transmission circuit (12), and a second signal transmission circuit (13); and the position sensor (11) is connected to the first signal transmission circuit (12) and the second signal transmission circuit (13), the first signal transmission circuit (12) is configured to connect to a first electronic control unit (2), and the second signal transmission circuit (13) is configured to connect to a second electronic control unit (3).

20. An accelerator pedal, wherein the accelerator pedal comprises an accelerator pedal mechanical part and the accelerator pedal position detection unit (1) according to claim 19.

21. A vehicle, wherein the vehicle comprises the driving control system according to any one of claims 1 to 18.

22. A driving control method, wherein the driving control method is applied to the driving control system according to any one of claims 1 to 18, and the driving control method comprises:

detecting, by a second electronic control unit (3), that a first electronic control unit (2) is faulty; and
controlling, by the second electronic control unit (3), a power output of a vehicle based on a position signal received through a second signal transmission circuit (13).

23. The driving control method according to claim 22, wherein before the controlling, by the second electronic control unit (3), a power output of a vehicle based on a position signal received through a second signal transmission circuit (13), the driving control method further comprises:
restarting the vehicle after the second electronic control unit (3) detects that the vehicle is turned off.

24. The driving control method according to claim 22 or 23, wherein the driving control method further comprises:
when the first electronic control unit (2) is normal, controlling, by the first electronic control unit (2), the power output of the vehicle based on a position signal received through a first signal transmission circuit (12).

25. A driving control method, wherein the driving control method is applied to a second electronic control unit (3) of the driving control system according to any one of claims 1 to 18, and the driving control method comprises:

detecting that a first electronic control unit (2) is faulty; and
controlling a power output of a vehicle based on a position signal received through a second signal transmission circuit (13).

26. A driving control apparatus, wherein the driving control apparatus is configured in a second electronic control unit (3) of the driving control system according to any one of claims 1 to 18, and the driving control apparatus comprises:

a detection module, configured to detect that a first electronic control unit (2) is faulty; and
a control module, configured to control a power output of a vehicle based on a position signal received through a second signal transmission circuit (13).

27. A computer-readable storage medium, wherein the computer-readable storage medium stores at least one instruction, and the instruction is loaded and executed by a controller to implement the driving control method according to claim 25.

28. A computer program product, wherein the computer program product comprises at least one instruction, and the instruction is executed by an electronic control unit, to enable the electronic control unit to implement the driving control method according to claim 25.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

A second electronic control unit 3 detects that a first electronic control unit 2 is faulty ⟍ 2101

The second electronic control unit 3 controls a power output of a vehicle based on a position signal received through a second signal transmission circuit 13 ⟍ 2102

FIG. 21

Detect that a first electronic control unit 2 is faulty — 2201

Control a power output of a vehicle based on a position signal received through a second signal transmission circuit 13 — 2202

FIG. 22

Driving control apparatus

Detection module — 2301

Control module — 2302

FIG. 23

2400

Electronic control unit

2401          2404

| Processor | Processor |
|-----------|-----------|
| CPU 0 | CPU 0 |
| CPU 1 | CPU 1 |

Bus

Memory    2402

Program code    2410

2403

Communication interface

FIG. 24

## INTERNATIONAL SEARCH REPORT

| International application No. |
|---|
| **PCT/CN2022/135286** |

| A. | CLASSIFICATION OF SUBJECT MATTER |
|---|---|

G05D1/12(2006.01)i

According to International Patent Classification (IPC) or to both national classification and IPC

| B. | FIELDS SEARCHED |
|---|---|

Minimum documentation searched (classification system followed by classification symbols)

IPC：G05,B60,F02

Documentation searched other than minimum documentation to the extent that such documents are included in the fields searched

Electronic data base consulted during the international search (name of data base and, where practicable, search terms used)

CNABS, VEN, ENTXT, CNTXT, CNKI, IEEE, 万方, WANFANG, 读秀, DUXIU: 加速, 油门, 踏板, 位置, 开度, 位移, 行程, 故障, 冗余, 多路, 第二, 副, 从, 控制器, 控制单元, 自动驾驶, 无人驾驶, 差分, 线性, 电压, 供电, 电源, 隔离电路, accelerator, throttle , pedal, position, opening signal, fault, redundancy, second, slave , sub, controller, ECU, VCU, EMS, ADU, autonomous , differential , voltage, power, isolate

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 102756669 A (INDUSTRIAL TECHNOLOGY RESEARCH INSTITUTE) 31 October 2012 (2012-10-31)<br>description, paragraphs 43-78 | 1-2, 15-17, 19-28 |
| Y | CN 102756669 A (INDUSTRIAL TECHNOLOGY RESEARCH INSTITUTE) 31 October 2012 (2012-10-31)<br>description, paragraphs 43-78 | 3-14, 18 |
| Y | CN 217804694 U (BEIJING JINGSHEN SHENXIANG TECHNOLOGY CO., LTD.) 15 November 2022 (2022-11-15)<br>description, paragraphs 38-59 | 10-12, 18 |
| Y | CN 102508016 A (CHONGQING CHANGAN AUTOMOBILE CO., LTD. et al.) 20 June 2012 (2012-06-20)<br>entire document | 3-9, 13-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 August 2023** | **29 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2022/135286** |

### C. DOCUMENTS CONSIDERED TO BE RELEVANT

| Category* | Citation of document, with indication, where appropriate, of the relevant passages | Relevant to claim No. |
| --- | --- | --- |
| A | CN 114872717 A (APOLLO INTELLIGENT TECHNOLOGY (BEIJING) CO., LTD.) 09 August 2022 (2022-08-09) entire document | 1-28 |
| A | CN 110876265 A (SZ DJI TECHNOLOGY CO., LTD.) 10 March 2020 (2020-03-10) entire document | 1-28 |
| A | KR 20210132802 A (SSANGYONG MOTOR COMPANY) 05 November 2021 (2021-11-05) entire document | 1-28 |
| A | CN 112193183 A (GREAT WALL MOTOR COMPANY LIMITED) 08 January 2021 (2021-01-08) entire document | 1-28 |
| A | CN 112389353 A (BEIJING BAIDU NETCOM SCIENCE AND TECHNOLOGY CO., LTD.) 23 February 2021 (2021-02-23) entire document | 1-28 |
| A | CN 107697072 A (BEIJING ELECTRIC VEHICLE CO., LTD.) 16 February 2018 (2018-02-16) entire document | 1-28 |
| A | US 2019337526 A1 (RED BEND LTD.) 07 November 2019 (2019-11-07) entire document | 1-28 |

Form PCT/ISA/210 (second sheet) (July 2022)

EP 4 613 599 A1

## INTERNATIONAL SEARCH REPORT
### Information on patent family members

International application No.

**PCT/CN2022/135286**

| Patent document cited in search report | | | Publication date (day/month/year) | Patent family member(s) | | | Publication date (day/month/year) |
|---|---|---|---|---|---|---|---|
| CN | 102756669 | A | 31 October 2012 | US | 2012290186 | A1 | 15 November 2012 |
| CN | 217804694 | U | 15 November 2022 | None | | | |
| CN | 102508016 | A | 20 June 2012 | None | | | |
| CN | 114872717 | A | 09 August 2022 | None | | | |
| CN | 110876265 | A | 10 March 2020 | WO | 2020191724 | A1 | 01 October 2020 |
| | | | | US | 2021197857 | A1 | 01 July 2021 |
| | | | | EP | 3885213 | A1 | 29 September 2021 |
| | | | | EP | 3885213 | A4 | 08 December 2021 |
| KR | 20210132802 | A | 05 November 2021 | None | | | |
| CN | 112193183 | A | 08 January 2021 | None | | | |
| CN | 112389353 | A | 23 February 2021 | None | | | |
| CN | 107697072 | A | 16 February 2018 | None | | | |
| US | 2019337526 | A1 | 07 November 2019 | EP | 3523169 | A1 | 14 August 2019 |
| | | | | EP | 3523169 | A4 | 03 June 2020 |
| | | | | EP | 3523169 | B1 | 14 July 2021 |
| | | | | WO | 2018065973 | A1 | 12 April 2018 |
| | | | | US | 10549760 | B2 | 04 February 2020 |

Form PCT/ISA/210 (patent family annex) (July 2022)